# EUROPÄISCHE PATENTSCHRIFT

(11) **EP 4 541 448 B1**
(45) Veröffentlichungstag und Bekanntmachung des Hinweises auf die Patenterteilung: **29.04.2026**
(21) Anmeldenummer: 24207075.3
(22) Anmeldetag: 16.10.2024
(51) Int. Cl.: B01D 46/00, B01D 46/24, B01D 46/42, B01D 46/58, B01D 46/88

(54) **FLUIDFILTERSYSTEM DER PROZESSLUFTTECHNIK**
FLUID FILTER SYSTEM FOR PROCESS AIR TECHNOLOGY
SYSTÈME DE FILTRATION DES FLUIDES DE LA TECHNIQUE DE L'AIR DE PROCESS

(30) Priorität: 16.10.2023 DE 102023128238
(43) Veröffentlichungstag der Anmeldung: 23.04.2025
(73) Patentinhaber: Hengst SE, 48147 Münster (DE)
(72) Erfinder: Bernstorff, Olaf, 58455 Witten (DE)
(74) Vertreter: Patentanwälte Olbricht Buchhold Keulertz

(56) Entgegenhaltungen:
- DE-A1- 102021 132 743
- US-A1- 2006 207 230
- US-A1- 2019 374 892
- US-B2- 10 821 391

## Beschreibung

Die Erfindung betrifft einen Fluidfilter als Filtrationseinrichtung, insbesondere für die industrielle Luftfiltration, wie sie als sogenannte Patronenentstauber bekannt ist. Weiterhin betrifft die Erfindung einen Filtereinsatz mit Flanschplatte, wie er aus der Praxis als sogenannte Filterpatrone bekannt ist, sowie die Verwendung des Filtereinsatz in einem erfindungsgemäßen Fluidfilter sowie das Verfahren zu dessen Montage in dem Fluidfilter.

Aus der DE 10 2021 132 743 A1 und der US 2019/0374892 A1 ist jeweils ein gattungsgemäßer Fluidfilter für die industrielle Luftfiltration bekannt sowie ein gattungsgemäßer Filtereinsatz, dessen Flanschplatte in Draufsicht unterschiedliche Abmessungen in zwei unterschiedlichen Richtungen aufweist und insofern länglich ist. Die Filtereinsätze werden in einer translatorischen, horizontalen Schiebebewegung in den Innenraum des geöffneten Gehäuses des Fluidfilters eingeschoben, nämlich auf Tragschienen aufgeschoben, die sich in dem Innenraum befinden und in Richtung der Schiebebewegung verlaufen. Der Filterkörper, der die filterwirksame, von dem jeweiligen Fluid durchströmbare Oberfläche des Filtereinsatzes bildet, hängt von der Flanschplatte nach unten und verläuft somit zwischen den beiden Tragschienen.

Die bekannten Fluidfilter weisen jeweils ein Gehäuse mit einem typischerweise rechteckigen Querschnitt auf, dessen Innenraum über eine Tür zugänglich ist. Zugunsten der Stabilität des Gehäuses erstreckt sich die Tür nicht über die volle Breite einer Gehäuseseite, so dass auch bei geöffneter Tür der Innenraum nicht über seine volle Breite zugänglich ist. Vielmehr ergeben sich beiderseits neben der Tür Räume im Innenraum, die im Rahmen der vorliegenden Erfindung jeweils als Totraum bezeichnet werden, weil sie beim Einbringen der Filtereinsätze in das Gehäuse einen unzugänglichen, nicht nutzbaren Raum darstellen.

Der Erfindung liegt die Aufgabe zugrunde, bei einem Fluidfilter, insbesondere einem Patronenentstauber für die industrielle Luftfiltration, eine Verbesserung des Verhältnisses der filterwirksamen Oberfläche des Filtereinsatzes zu dem Gehäusequerschnitt zu ermöglichen.

Diese Aufgabe wird gelöst durch die Verwendung eines Filtereinsatzes nach Anspruch 1, durch ein Verfahren zur Montage eines Filtereinsatzes in einem Gehäuse eines Fluidfilters nach Anspruch 3, durch einen Filtereinsatz nach Anspruch 6, durch einen Fluidfilter nach Anspruch 10 und durch eine Halterung nach Anspruch 13. Vorteilhafte Ausgestaltungen sind in den Unteransprüchen beschrieben.

Ein erster Aspekt der Erfindung sieht die Verwendung eines Filtereinsatzes vor, mit einem Filterkörper, der länglich und für das zu filternde Fluid durchlässig ausgestaltet ist, im Gebrauch aufrecht ausgerichtet ist, und eine obere Auslassöffnung aufweist, und mit einer Flanschplatte, die um die Auslassöffnung des im Gebrauch nach unten hängenden Filterkörpers verläuft und den Filterkörper trägt und einen umlaufenden Kragen schafft, der sich in radialer Richtung über den Filterkörper hinaus nach außen erstreckt, wobei die Flanschplatte in Draufsicht zwei unterschiedliche Längen in zwei unterschiedlichen Richtungen und somit eine Längs- und eine Querrichtung aufweist, für einen Fluidfilter, der ein Gehäuse aufweist, das einen Innenraum umgibt und mittels einer verschließbaren Zugangsöffnung den Zugang zum Innenraum des Gehäuses wahlweise freigibt oder verschließt, wobei der Innenraum breiter ist als die Zugangsöffnung und der Anteil des Innenraums, der seitlich neben der Zugangsöffnung verläuft, als Totraum bezeichnet ist, und der im Gehäuse eine Halterung aufweist, die zur Festlegung der Flanschplatte eines Filtereinsatzes bestimmt ist, wobei die Halterung und der Filtereinsatz sich jeweils bis in den Totraum erstrecken, und der Filtereinsatz in der Art gehalten ist, dass die Flanschplatte sich in ihrer Längsrichtung bis in den Totraum erstreckt.

Die Erfindung schlägt mit anderen Worten vor, den Filtereinsatz mit seiner länglichen Flanschplatte in deren Längsrichtung in das Gehäuse des Fluidfilters einzuschieben und erst dann in eine Ausrichtung zu drehen, die von dieser Längs-Ausrichtung abweicht.

Die Drehbewegung erfolgt um die Hochachse des Filtereinsatzes, so dass nun die längliche Flanschplatte bis in den Totraum ragt. Die Öffnungsbreite der Tür muss erfindungsgemäß nicht genutzt werden, um die Breite der Flanschplatte in deren Gebrauchs-Ausrichtung passieren zu lassen, sondern kann für das Passieren des Filterkörpers genutzt werden, und erst anschließend, im Innenraum des Gehäuses, wird der Filtereinsatz durch die Drehung in seine Gebrauchs-Ausrichtung gebracht, in welche die Flanschplatte in der Halterung sicher gehalten ist, beispielsweise mit einer ausreichenden Überdeckung auf zwei Tragschienen aufliegt. Da die Ausgestaltung der Halterung mit zwei parallelen Tragschienen in der Praxis verbreitet ist, wird nachfolgend häufig auf die Tragschienen als eine beispielhafte Ausgestaltung einer Halterung auch in solchen Fällen Bezug genommen, in denen die Halterung nicht notwendigerweise auf eine solche konstruktive Ausgestaltung eingeschränkt sein muss.

Dadurch, dass erfindungsgemäß auch die Toträume zur Aufnahme von Filtereinsätzen genutzt werden, können beispielsweise die Tragschienen von Halterungen in einem größeren Abstand voneinander angeordnet werden, und dementsprechend können die Filterkörper der verwendeten Filtereinsätze einen größeren Querschnitt aufweisen, als dies bei den bekannten Patronenentstaubern möglich ist.

Bezogen auf den Gehäusequerschnitt des Fluidfilters weist ein erfindungsgemäßer Fluidfilter daher eine vergleichsweise größere Filterfläche auf. Das Gehäuse kann daher beispielsweise kleinere bauliche Abmessungen aufweisen, was die Auswahlmöglichkeiten eines geeigneten Aufstellungsortes verbessert. Bei unveränderten Gehäuseabmessungen hingegen ermöglicht die vergleichsweise größere Filterfläche längere Wartungsintervalle oder einen geringeren Druckverlust, welcher wiederum eine geringere Antriebs-, z. B. Gebläseleistung zum Betrieb des Fluidfilters erfordert.

Die längliche Ausgestaltung der Flanschplatte bedeutet, dass diese eine vom Kreisrund abweichende Gestalt aufweist und in zwei unterschiedlichen Richtungen unterschiedliche Längen aufweist.

Eine Ausgestaltung der Verwendung eines Filtereinsatzes sieht vor, dass dessen Flanschplatte in Draufsicht von einem Viereck abweichend ausgestaltet ist. Die Flanschplatte weist mithin in Draufsicht eine Form auf, die von einem Viereck abweicht. Beispielsweise kann die Flanschplatte länglich und rund, nämlich oval ausgestaltet sein. Möglichst große Auflageflächen und somit eine möglichst stabile Lage der Flanschplatte in der Halterung des Fluidfilters, beispielsweise auf den erwähnten Tragschienen, können jedoch erreicht werden, wenn die Flanschplatte einen eckigen Grundriss aufweist.

Eine weitere Ausgestaltung der Verwendung eines Filtereinsatzes sieht vor, dass dessen Flanschplatte unregelmäßig achteckig in der Art ausgestaltet ist, dass zwei gegenüberliegende Seiten einen größeren Abstand zueinander aufweisen als zwei andere, ebenfalls gegenüberliegende Seiten. Von den jeweils einander gegenüberliegenden Seiten kann damit ein Seitenpaar einen größeren Abstand der Seiten zueinander aufweisen als ein anderes Seitenpaar der Flanschplatte.

Ein zweiter Aspekt der Erfindung sieht ein Verfahren zur Montage eines Filtereinsatzes in einem Gehäuse eines Fluidfilters vor, wobei das Gehäuse einen Innenraum umgibt und eine verschließbare Zugangsöffnung aufweist, welche den Zugang zum Innenraum des Gehäuses wahlweise freigibt oder verschließt, wobei der Innenraum breiter ist als die Zugangsöffnung und wobei der Anteil des Innenraums, der seitlich neben der Zugangsöffnung verläuft, als Totraum bezeichnet ist, und wobei der Filtereinsatz einen Filterkörper aufweist, der länglich und für das zu filternde Fluid durchlässig und filterwirksam ausgestaltet ist, im Gebrauch aufrecht ausgerichtet ist, ein geschlossenes unteres Ende und eine obere Auslassöffnung aufweist, sowie eine Flanschplatte aufweist, die um die Auslassöffnung des im Gebrauch nach unten hängenden Filterkörpers verläuft und den Filterkörper trägt und einen umlaufenden Kragen schafft, der sich in radialer Richtung über den Filterkörper hinaus nach außen erstreckt, wobei die Flanschplatte in Draufsicht zwei unterschiedliche Längen in zwei unterschiedlichen Richtungen und somit eine Längs- und eine Querrichtung aufweist, und wobei der Fluidfilter eine Halterung aufweist, die zur Festlegung der Flanschplatte eines Filtereinsatzes bestimmt ist, mit folgenden Verfahrensschritten:
▪ die Zugangsöffnung des Gehäuses wird geöffnet,
▪ der Filtereinsatz wird in die Halterung eingebracht, und die Zugangsöffnung des Gehäuses wird geschlossen,
▪ bevor der Filtereinsatz in die Halterung eingebracht wird, wird er außerhalb des Gehäuses in eine erste Ausrichtung gebracht, in welcher die Längsachse der Flanschplatte in den Innenraum weist,
▪ in dieser ersten Ausrichtung wird der Filtereinsatz in den Innenraum eingebracht,
▪ im Innenraum wird der Filtereinsatz um seine Hochachse geschwenkt und in eine zweite Ausrichtung gebracht, in welcher die Längsachse der Flanschplatte sich in den Totraum erstreckt.

Dieses erfindungsgemäße Montageverfahren, um einen Filtereinsatz in dem Gehäuse des Fluidfilters anzuordnen, besteht mithin darin, dass der Filtereinsatz mit seiner länglichen Flanschplatte in einer solchen Ausrichtung in die Halterung eingebracht wird, dass die Längsachse der Flanschplatte in den Innenraum weist bzw., wenn sich der Filtereinsatz bereits im Innenraum befindet, zur Gehäuseöffnung weist, durch welche der Filtereinsatz in das Gehäuse eingebracht oder aus dem Gehäuse entnommen werden kann. Die Längsrichtung der Flanschplatte verläuft also parallel oder in einem ersten, flachen Winkel zu den Tragschienen einer Halterung, auf welche die Flanschplatte aufgelegt werden soll.

Ausgehend von dieser Längsausrichtung wird der Filtereinsatz um seine Hochachse gedreht, so dass die Längsachse der Flanschplatte in Bezug auf die Tragschienen in einen zweiten Winkel gebracht wird, der steiler oder sogar quer zu den Tragschienen verläuft. Während die Flanschplatte also zunächst vergleichsweise schmal zwischen den Tragschienen verläuft, nimmt sie anschließend an die Drehbewegung eine größere Breite ein, so dass sie nun von oben auf die Tragschienen aufgelegt werden kann und der Filtereinsatz somit auf den Tragschienen gehalten ist.

In einer Ausgestaltung des Verfahrens wird der Filtereinsatz in der ersten Ausrichtung in die Halterung eingebracht und in dem Zustand, in welchem der Filtereinsatz von der Halterung getragen wird, in die zweite Ausrichtung gebracht wird.

Damit kann der Filtereinsatz bereits in der ersten Ausrichtung in die Halterung eingebracht werden und von der Halterung getragen werden, so dass möglichst frühzeitig für das Personal die Handhabung des Filtereinsatzes erleichtert wird, in dem das Gewicht des Filtereinsatzes zumindest teilweise von der Halterung des Fluidfilters aufgenommen wird. Erst dann erfolgt die Drehbewegung, bei welcher die Überdeckung, mit welcher die Flanschplatte auf Elementen der Halterung liegt, vergrößert wird und somit ein sicherer Halt des Filtereinsatzes in der Halterung verbessert wird.

In einer weiteren Ausgestaltung des erfindungsgemäßen Verfahrens ist vorgesehen, dass die Halterung bewegliche Haltemittel aufweist, die wahlweise zwischen einer die Flanschplatte freigebenden Offenstellung und einer die Flanschplatte festlegenden Haltestellung beweglich sind, und dass die Haltemittel in ihre Offenstellung gebracht werden, bevor der Filtereinsatz in die Halterung eingebracht wird, und dass die Haltemittel in ihre Haltestellung gebracht werden, nachdem der Filtereinsatz in die zweite Ausrichtung gebracht worden ist.

Damit wird ein zuverlässig fluiddichter Anschluss des Filtereinsatzes ermöglicht, indem die Halterung bewegliche Haltemittel aufweist. Das Montageverfahren, um den Filtereinsatz in den Fluidfilter einzusetzen, weist in diesem Fall den Verfahrensschritt auf, dass die Haltemittel zunächst in eine sogenannte Offenstellung gebracht werden, in welcher sie die Flanschplatte freigeben, so dass die Flanschplatte in die Halterung eingebracht werden kann und in der gewünschten Drehstellung ausgerichtet werden kann. Anschließend werden die Haltemittel in eine sogenannte Haltestellung gebracht, in welcher sie die Flanschplatte festlegen. Dies kann beispielsweise dadurch erfolgen, dass der Filtereinsatz mit seiner Auslassöffnung für die Reinluft an eine Fläche des Fluidfilters gepresst wird, so dass ein fluiddichter Anschluss dieser Auslassöffnung an einen Reinluftbereich des Fluidfilters gewährleistet ist und dass Eindringen ungereinigten Fluids in diesen Reinluftbereich vermieden wird.

Eine weitere Ausgestaltung des Verfahrens sieht vor, dass die Halterung Tragschienen aufweist, auf welche die Flanschplatte beiderseits vom Filterkörper aufgelegt wird.

Ein dritter Aspekt der Erfindung sieht einen Filtereinsatz für einen Fluidfilter vor, mit einem Filterkörper, der länglich und für das zu filternde Fluid durchlässig und filterwirksam ausgestaltet ist, im Gebrauch aufrecht ausgerichtet ist, ein geschlossenes unteres Ende und eine obere Auslassöffnung aufweist, und mit einer Flanschplatte, die um die obere Auslassöffnung des im Gebrauch nach unten hängenden Filterkörpers verläuft und den Filterkörper trägt und einen umlaufenden Kragen schafft, der sich in radialer Richtung über den Filterkörper hinaus nach außen erstreckt, wobei die Flanschplatte in Draufsicht zwei unterschiedliche Längen in zwei unterschiedlichen Richtungen und somit eine Längs- und eine Querrichtung aufweist, und wobei die Flanschplatte in Draufsicht von einem Viereck abweichend ausgestaltet ist.

Ein erfindungsgemäßer Filtereinsatz weist damit, wie oben angesprochen, in Draufsicht eine längliche, von einem Viereck abweichende Form auf, beispielsweise die erwähnte, unregelmäßig achteckige Ausgestaltung. Dabei müssen die Seitenpaare, die durch einander gegenüberliegende Seiten der Flanschplatte gebildet werden, nicht notwendigerweise exakt parallel zueinander verlaufen, sondern können beispielsweise geringfügig von einer solchen Parallelität abweichend V-förmig zueinander verlaufen, um beispielsweise das Einführen der Flanschplatte zwischen zwei Tragschienen zu erleichtern. Auch müssen die Seiten der Flanschplatte ohnehin nicht notwendigerweise geradlinig verlaufen, sondern können beispielsweise gezackt, wellig oder gebogen verlaufen. Der geradlinige Verlauf wird allerdings insofern als vorteilhaft angesehen, als er eine möglichst große Auflagefläche der Flanschplatte in einer Halterung ermöglicht, beispielsweise auf Tragschienen.
dass die beiden erwähnten gegenüberliegenden Seiten, die den vergleichswiese größeren Abstand zueinander aufweisen, parallel zueinander verlaufen.

Die Erfindung sieht weiter vor, dass die beiden erwähnten gegenüberliegenden Seiten, die den vergleichswiese größeren Abstand zueinander aufweisen, V-förmig schräg zueinander verlaufen.

Der Filterkörper kann mithin angepasst an die längliche Formgebung der Flanschplatte einen ebenfalls länglichen Querschnitt aufweisen. In einer Ausgestaltung weist der Filterkörper jedoch einen kreisrunden Querschnitt auf, was in mehrfacher Hinsicht vorteilhaft ist: Erstens ist ein kreisförmiger Querschnitt bei einer radialen Anströmung von außen besonders druckstabil im Vergleich zu einem länglichen, insbesondere einem eckigen Querschnitt des Filterkörpers. Zweitens wird im Vergleich zu einem Filterkörper mit länglichem Querschnitt eine größere filterwirksame Oberfläche bereitgestellt. Bezogen auf die Anordnung eines Filtereinsatzes zwischen zwei Tragschienen liegt das Bestreben darin, den Filterkörper so auszugestalten, dass dieser den Zwischenraum zwischen den Tragschienen möglichst vollständig ausnutzt, sich also möglichst weit bis an die Tragschienen heran erstreckt. Wenn man davon ausgeht, das ein länglicher Querschnitt in seiner größeren Längsabmessung dasselbe Maß aufweist wie ein kreisrunder Querschnitt, nämlich idealerweise das Abstandsmaß zwischen den Tragschienen, führen die Abflachungen eines länglichen Querschnitts zu einer kleineren Oberfläche des Filterkörpers im Vergleich zu einem kreisrunden Querschnitt. Zudem kann unabhängig von dieser grundsätzlichen Querschnittsgeometrie der Filterkörper in Art eines Faltenfilters ausgestaltet sein, um auf diese Weise die filterwirksame Oberfläche noch weiter zu vergrößern.

Weiter kann es von Vorteil sein, wenn der Filterkörper einen kreisrunden Querschnitt aufweist. Der Filterkörper kann ferner vorteilhaft zylindrisch oder konisch ausgestaltet sein.

Ausgehend von einem kreisrunden Querschnitt ist der Filterkörper in einer Ausgestaltung bevorzugt zylindrisch. Hierdurch wird über die gesamte Höhe des Filterkörpers eine gleichbleibend große filterwirksame Oberfläche geschaffen und eine vergleichsweise einfache, wirtschaftliche Fertigung des Filterkörpers unterstützt.

Alternativ dazu weist in einer anderen Ausgestaltung der Filterkörper mit kreisrundem Querschnitt über seine Höhe eine konische oder frustokonische Form auf. In einer ersten Variante verjüngt sich der Filterkörper dabei nach unten, so dass eine Selbstreinigung des Filtereinsatzes unterstützt wird, bei welcher ein Anteil der anhaftenden Partikel bereits im Betrieb des Fluidfilters, beispielsweise durch Vibrationen bedingt, automatisch von dem Filterkörper herabfallen kann, zugunsten möglichst lange Wartungsintervalle.

In einer zweiten Variante hingegen erweitert sich der Filterkörper zu seinem von der Flanschplatte fernen Ende nach unten. Ausgehend davon, dass oben, unterhalb der Flanschplatte, der maximale Durchmesser des Filterkörpers durch den Abstand zweier Tragschienen begrenzt ist, kann durch den nach unten größer werdenden Querschnitt die Filterfläche im Vergleich zu einem zylindrischen Filterkörper vergrößert werden. Konstruktiv ist es günstig, wenn der Filterkörper an seinem unteren Ende eine formstabile Endscheibe aufweist. Ergänzend oder alternativ kann der Filterkörper an seinem unteren Ende eine geschlossene Endscheibe aufweisen und eine fluiddurchlässige, filterwirksame Mantelfläche zwischen der Endscheibe und der Flanschplatte aufweisen.

Das filterwirksame Material des Filterkörpers kann einen Schaumwerkstoff oder einen Papierwerkstoff aufweisen und so verformbar sein, dass der Filterkörper an seinem freien Ende, welches der Flanschplatte gegenüberliegt, in Einbaulage also an seinem unteren Ende dadurch geschlossen werden kann, dass dieses verformbare Material des Filterkörpers ähnlich wie das Ende einer Tube mit sich selbst verbunden wird, der Runde Querschnitt des Filterkörpers dort also in eine Linie übergeht. Alternativ dazu weist der Filterkörper in einer Ausgestaltung an seinem freien, unteren Ende eine Endscheibe auf, so dass der Filterkörper über seine gesamte Höhe einen kreisrunden Querschnitt beibehalten kann und somit für eine Anströmung von außen möglichst gleichmäßige Verhältnisse bietet. Die untere Endscheibe ist formstabil in der Art, dass sie unter den im Betrieb herrschenden Bedingungen das untere Ende des Filterkörpers stützt und ein Kollabieren verhindert.

Die untere Endscheibe kann selbst eine filterwirksame Oberfläche bereitstellen, indem sie beispielsweise aus demselben Material wie die Mantelfläche des Filterkörpers besteht. Auf diese Weise kann die filterwirksame Oberfläche des Filterkörpers maximiert werden. Alternativ dazu kann die untere Endscheibe aus einem anderen Werkstoff bestehen als die Mantelfläche des Filterkörpers und beispielsweise als sogenannte geschlossene Endscheibe für das zu filternde Fluid undurchlässig sein, so dass der Filterkörper eine filterwirksame Oberfläche in Form der Mantelfläche des kreisrunden Querschnitts aufweist, die sich zwischen der unteren Endscheibe und der Flanschplatte erstreckt. Die Ausgestaltung der unteren Endscheibe als geschlossene Endscheibe ermöglicht deren besonders stabile und mechanisch belastbare Ausgestaltung, z.B. in Form einer metallischen Platte.

Gemäß einem vierten Aspekt der Erfindung ist ein Fluidfilter, vorgesehen, der ein Gehäuse aufweist, das einen Innenraum umgibt und eine verschließbare Zugangsöffnung aufweist, welche den Zugang zum Innenraum des Gehäuses wahlweise freigibt oder verschließt, wobei der Innenraum breiter ist als die Zugangsöffnung und der Anteil des Innenraums, der seitlich neben der Zugangsöffnung verläuft, und als Totraum bezeichnet ist, und der einen Filtereinsatz aufweist, mit einem Filterkörper (5), der länglich und für das zu filternde Fluid durchlässig und filterwirksam ausgestaltet ist, im Gebrauch aufrecht ausgerichtet ist, ein geschlossenes unteres Ende und eine obere Auslassöffnung aufweist, und mit einer Flanschplatte, die um die Auslassöffnung des im Gebrauch nach unten hängenden Filterkörpers verläuft und den Filterkörper trägt und einen umlaufenden Kragen schafft, der sich in radialer Richtung über den Filterkörper hinaus nach außen erstreckt, wobei die Flanschplatte in Draufsicht zwei unterschiedliche Längen in zwei unterschiedlichen Richtungen und somit eine Längs- und eine Querrichtung aufweist, und der im Gehäuse eine Halterung aufweist, welche die Flanschplatte des Filtereinsatzes festlegt, und wobei die Halterung sich bis in den Totraum erstreckt, derart, dass der in der Halterung festgelegte Filtereinsatz teilweise innerhalb des Totraums angeordnet ist.

Ein erfindungsgemäßer Fluidfilter weist mithin, bezogen auf die Abmessungen seines Gehäuses, eine sehr große Filterfläche auf, da je nach Anzahl der im Gehäuse angeordneten Filtereinsätze einer, mehrere oder sämtliche der Filtereinsätze sich bis in einen Totraum erstrecken, so dass deren Filterkörper entsprechend größer bemessen sein können als wenn sie ausschließlich in der Flucht hinter einer Zugangsöffnung angeordnet sein müssten, nämlich in das Lichtraumprofil der Zugangsöffnung passen müssten.

Diese Anordnung der Filtereinsätze wird einerseits durch eine Ausgestaltung der Halterung ermöglicht, die sich nämlich ebenfalls bis in den Totraum erstreckt, und andererseits durch die längliche Ausgestaltung der Flanschplatte, so dass ein Filtereinsatz längs in den Fluidfilter eingeführt und anschließend im Inneren des Fluidfilters gedreht werden kann, um über das Lichtraumprofil der Zugangsöffnung hinaus bis in den Totraum zu ragen.

Um eine möglichst große filterwirksame Oberfläche innerhalb des Fluidfilters bereitstellen zu können, sieht die Erfindungs weiter vor, dass die Halterung die Aufnahme von wenigstens zwei Filtereinsätzen hintereinander ermöglichend ausgestaltet ist.

Mithin können vorteilhaft mehrere Filtereinsätze in dem Fluidfilter montiert werden. Ohne unterschiedliche Typen von Filtereinsätzen zu erfordern, kann dementsprechend durch die jeweils verwendete Anzahl von Filtereinsätzen in unterschiedlichen Typen von Fluidfiltern die jeweilige Größe der filterwirksamen Oberfläche skaliert werden.

In einer weiteren Ausgestaltung weist die Halterung daher eine solche Länge auf, dass sie zwei oder mehr Filtereinsätzen hintereinander aufnehmen kann.

Alternativ kann der Fluidfilter auch die Aufnahme von zwei Filtereinsätzen nebeneinander ermöglichend ausgestaltet sein, indem zwei Halterungen nebeneinander angeordnet sind.

Die genannten Maßnahmen können auch in Kombination verwirklicht sein, so dass je nach Länge der beiden Halterungen beispielsweise vier oder sechs Filtereinsätze in dem Gehäuse des Fluidfilters untergebracht werden können.

Um insbesondere bei der Anordnung von mehr als einem Filtereinsatz in dem Fluidfilter eine konstruktiv einfache Trennung zwischen der Rohrseite, in welcher sich ungefiltertes Fluid befindet, und der Reinseite des Filters zu ermöglichen, in welcher sich das gefilterte Fluid befindet, kann das Gehäuse oberhalb des Filtereinsatzes einen Reinraum aufweisen, der gegen den einen bzw. die mehreren Filtereinsätze durch eine Trennplatte abgetrennt ist. Da die Konstruktion des Gehäuses des Filtereinsatzes üblicherweise aus Stahlblechen besteht, wird die Trennplatte auch als Trennblech bezeichnet.

Die Trennplatte weist für jeden Filtereinsatz eine Durchtrittsöffnung auf, an welche der Innenraum des Filtereinsatzes, also die Reinseite des Filtereinsatzes anschließt.

Wenigstens ein Dichtungsring verläuft auf der Flanschplatte rings um die Auslassöffnung des Filtereinsatzes, und mit diesem Dichtungsring kann der Filtereinsatz von unten gegen das Trennblech gepresst werden, so dass der Dichtungsring die Durchtrittsöffnung des Trennblechs fluiddicht umgibt.

Ein fünfter Aspekt der Erfindung definiert eine Halterung, die dazu bestimmt ist, im Gebrauch eine längliche Flanschplatte eines Filtereinsatzes in einem Fluidfilter festzulegen, wobei die Halterung zwei Tragschienen aufweist, die in einem solchen Abstand zueinander verlaufen, dass sie im Gebrauch zwischen sich einen von der Flanschplatte herabhängenden Filterkörper sowie eine Auslassöffnung aufnehmen, die sich in der Flanschplatte des Filtereinsatzes befindet, und dass die Flanschplatte im Gebrauch auf den beiden Tragschienen aufliegt, und wobei die Tragschienen höhenbeweglich sind zwischen einer abgesenkten und einer angehobenen Stellung, wobei die beiden Tragschienen gegenüberliegende Aussparungen aufweisen, deren Länge so bemessen ist, dass eine längliche Flanschplatte in einer ersten Ausrichtung, in welcher sie sich längs zwischen den beiden Tragschienen befindet, über die Tragschienen hinaus nach oben anhebbar ist und oberhalb der Tragschienen in eine zweite Ausrichtung drehbar ist, in welcher sie quer zu den beiden Tragschienen verläuft und die beiden Tragschienen übergreift, und wobei die Aussparungen derart ausgestaltet sind, dass die Flanschplatte in einer Zwischenstellung zwischen der ersten und der zweiten Ausrichtung in die Aussparungen eintaucht.

Eine Ausgesatltung der Erfindung sieht vor, dass die Halterung als Doppelhalterung ausgestaltet ist und eine mittlere Halteleiste aufweist sowie beiderseits der mittleren Halteleiste jeweils eine Hubleiste, wobei diese beiden Hubleisten als innere Hubleisten jeweils mit einer davon im Abstand angeordneten äußeren Tragschiene zusammenwirken, derart, dass im Gebrauch zwei Filtereinsätze nebeneinander in der Doppelhalterung angeordnet sind, und wobei an der Halteleiste beiderseitig Führungselemente angeordnet sind, die mit jeweils komplementären Führungselementen der beiden Hubleisten zusammenwirken.

Eine weitere vorteilhafte Ausgestaltung der Halterung ergibt sich, wenn die an der Halteleiste angeordneten Führungselemente als Bolzen ausgestaltet sind, die sich quer durch die Halteleiste erstrecken, und dass an den Hubleisten schräg verlaufende Langlöcher angeordnet sind, in welche die Bolzen eingreifen, derart, dass eine Längsverschiebung der Hubleisten automatisch auch deren Höhenverlagerung bewirkt.

Die Erfindung wird nachfolgender anhand der rein schematischen Darstellungen näher erläutert. Dabei zeigt
- Fig. 1: eine perspektivische Ansicht in das geöffnete Gehäuse eines Fluidfilters, wobei ein Filtereinsatz von unten einer Halterung angenähert wird, die zwei Tragschienen aufweist,
- Fig. 2: die Situation der Fig. 1 aus einer anderen Blickrichtung,
- Fig. 3: eine Ansicht wie Fig. 2, nachdem der Filtereinsatz um seine Hochachse gedreht worden ist und sich ein seiner Gebrauchs-Ausrichtung befindet,
- Fig. 4: eine Draufsicht auf die Situation der Fig. 3,
- Fig. 5: eine Draufsicht auf die Situation der Fig. 2,
- Fig. 6: eine Draufsicht auf den Filtereinsatz während der Drehung, zwischen den Situationen der Fig. 4 und 5,
- Fig. 7: einen Vertikalschnitt durch den Filtereinsatz während der Situation der Fig. 2,
- Fig. 8: einen Vertikalschnitt durch den Filtereinsatz während der Situation der Fig. 3,
- Fig. 9: eine Frontansicht auf den Filtereinsatz während der Situation der Fig. 3,
- Fig. 10: eine Frontansicht ähnlich Fig. 9 auf zwei nebeneinander befindliche Filtereinsätze, bei entferntem Türrahmen,
- Fig. 11: eine Frontansicht ähnlich Fig. 10, wobei sich die beiden Filtereinsätze in ihrer Gebrauchs-Ausrichtung befinden, mit dargestelltem Türrahmen,
- Fig. 12: eine perspektivische Ansicht auf einen Ausschnitt einer Halterung,
- Fig. 13: eine perspektivische Ansicht aus einer anderen Blickrichtung als Fig. 12 auf zwei Halterungen und darin gehaltene Filtereinsätze,
- Fig. 14: eine Ansicht ähnlich Fig. 13, wobei sich die Filtereinsätze während ihrer jeweiligen Drehung, zwischen den Situationen der Fig. 4 und 5 befinden, und
- Fig. 15: eine perspektivische Ansicht auf einen Fluidfilter, wobei einige Bauteile des Gehäuses entfernt sind.

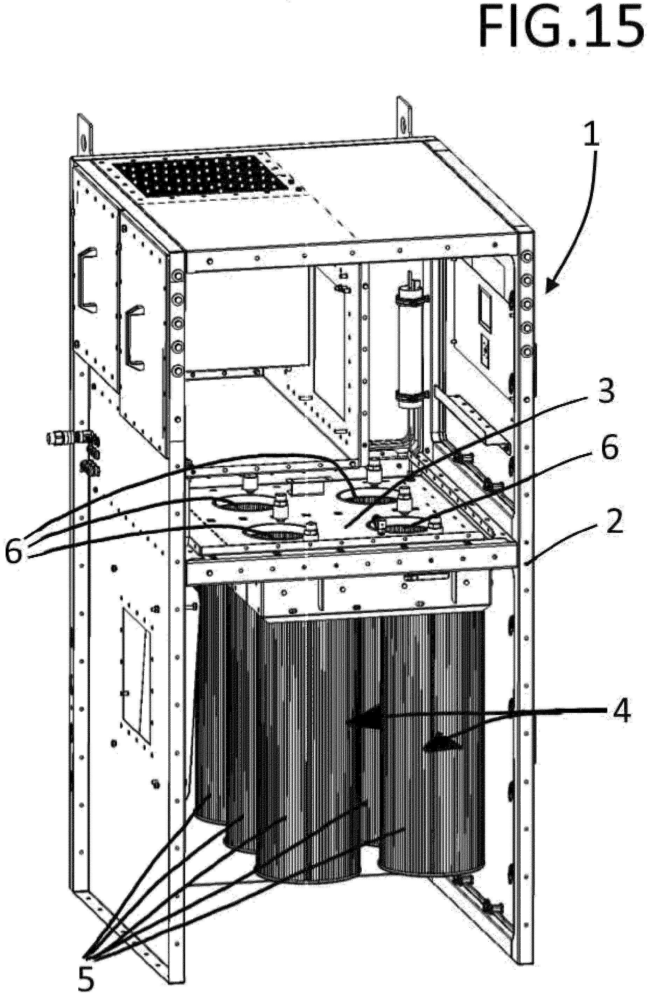

Fig. 15 zeigt einen Fluidfilter 1, der als sogenannter Patronenentstauber für die industrielle Luftfiltration bestimmt ist. Der Fluidfilter 1 weist ein Gehäuse 2 auf, das in Fig. 15 nur teilweise dargestellt ist. Beispielsweise fehlt eine Frontseite des Gehäuses 2, die eine Zugangsöffnung aufweist, welche einen Zugang zum Innenraum des Fluidfilters 1 ermöglicht, und welche mittels einer Tür, Klappe, eines Deckels oder dergleichen wahlweise fluiddicht verschließbar ist.

Der Fluidfilter 1 weist zwei übereinander angeordnete Kammern auf, die durch ein Trennblech 3 voneinander getrennt sind. In die untere Kammer wird ungefilterte Luft eingeleitet, und in dieser Kammer befinden sich bei dem dargestellten Ausführungsbeispiel sechs Filtereinsätze 4, die jeweils einen im wesentlichen hohlzylindrischen Filterkörper 5 aufweisen, der bei dem dargestellten Ausführungsbeispiel ein Faltenfilterelement aufweist. die Filtereinsätzen 4 befinden sich jeweils in ihrer Gebrauchs-Ausrichtung und schließen von unten dicht an das Trennblech 3 an. Die mit Partikeln beladene ungefilterte Luft durchströmt die Filterkörper 5 radial von außen nach innen, strömt anschließend als nun gefilterte Luft innerhalb des jeweiligen Filterkörpers 5 aufwärts und gelangt in die obere Kammer, wobei das Trennblech 3 über jedem Filtereinsatz 4 eine Durchtrittsöffnung 6 aufweist.

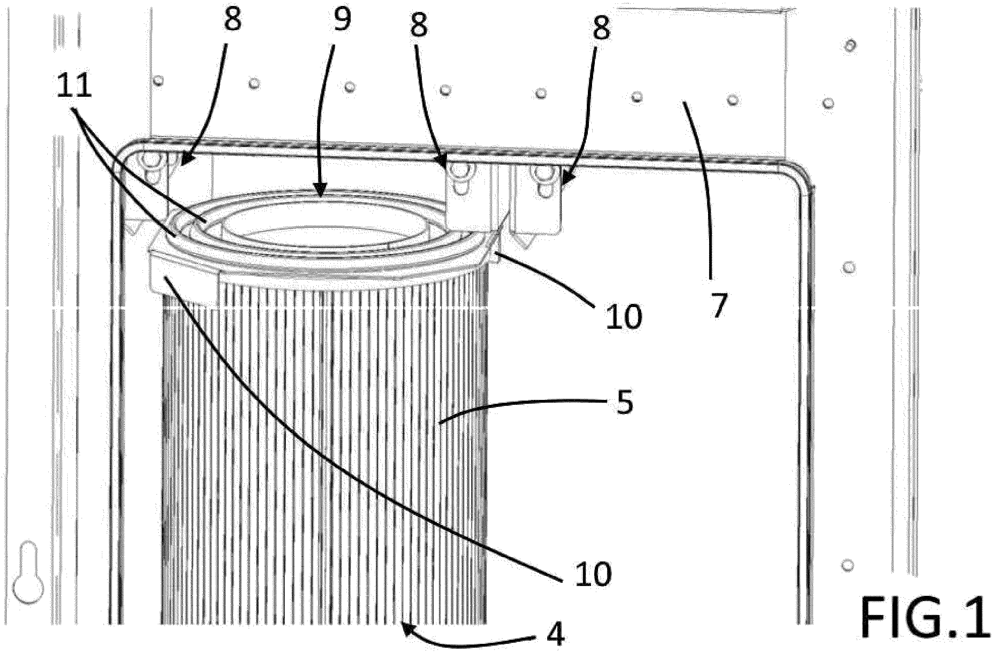

Fig. 1 zeigt eine perspektivische Ansicht auf die erwähnte, in Fig. 15 nicht dargestellte Frontseite 7 des Gehäuses 2 und durch einen Türausschnitt in das Innere des Fluidfilters 1. Die Tür, die den Türausschnitt wahlweise luftdicht abschließt, ist in Fig. 1 nicht dargestellt. Der dargestellte Filtereinsatz 4 befindet sich noch nicht in seiner Gebrauchs-Ausrichtung, sondern unterhalb von Tragschienen 8, wobei drei von insgesamt vier Tragschienen 8 erkennbar sind, die zwei nebeneinander angeordnete Halterungen bilden, um zwei Filtereinsätze 4 nebeneinander aufnehmen zu können, wie in Fig. 15 dargestellt.

Der Filtereinsatz 4 weist oberhalb des Filterkörpers 5 eine Flanschplatte 9 auf, die eine achteckige Grundform aufweist sowie zwei gegenüberliegende, abgewinkelte Abschnitte als Handgriffe 10, und die auf ihrer Oberseite mit elastischen Dichtungsringen 11 versehen ist, um eine luftdichte Anlage von unten an dem Trennblech 3 zu ermöglichen. Die Dichtungsringe 11 verlaufen um eine Auslassöffnung 21 des Filtereinsatzes 4, die im Betrieb mit einer Durchtrittsöffnung 6 des Trennblechs 3 fluchtet, so dass die gefilterte Luft aus dem Inneren des Filtereinsatzes 4 durch die Durchtrittsöffnung 6 in die obere Kammer des Gehäuses 2 strömen kann.

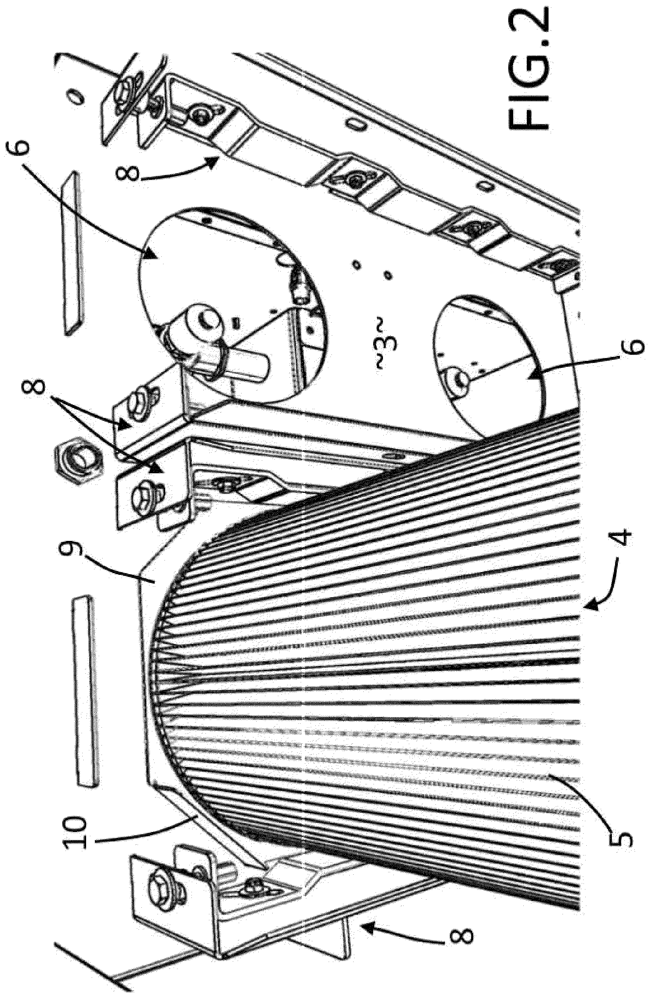

Fig. 2 zeigt die Situation von Fig. 1 in einer perspektivischen Ansicht von unten. Das Trennblech 3 mit den Durchtrittsöffnungen 6 ist erkennbar sowie die insgesamt vier Tragschienen 8, die jeweils mehrteilig ausgestaltet sind. Die Flanschplatte 9 ragt an ihren unterschiedlichen Seiten unterschiedlich weit radial über den Filterkörper 5 hinaus, so dass die Flanschplatte 9 in zwei unterschiedlichen Diagonalen unterschiedliche Längen aufweist und insofern länglich ausgestaltet ist. In der Montagesituation, die in den Fig. 1 und 2 dargestellt ist, ist der Filtereinsatz 4 so ausgerichtet, dass die Flanschplatte 9 lediglich geringe radiale Überstände zu den beiden benachbarten Tragschienen 8 hin aufweist. Der Filtereinsatz 4 kann daher in dieser Ausrichtung von unten an die Tragschienen 8 herangeführt werden, wie anhand der Fig. 1 deutlich wird, und er kann in dieser Ausrichtung zwischen den beiden benachbarten

Tragschienen 8 angehoben werden, bis sich die Flanschplatte 9 oberhalb der Tragschienen 8 befindet.

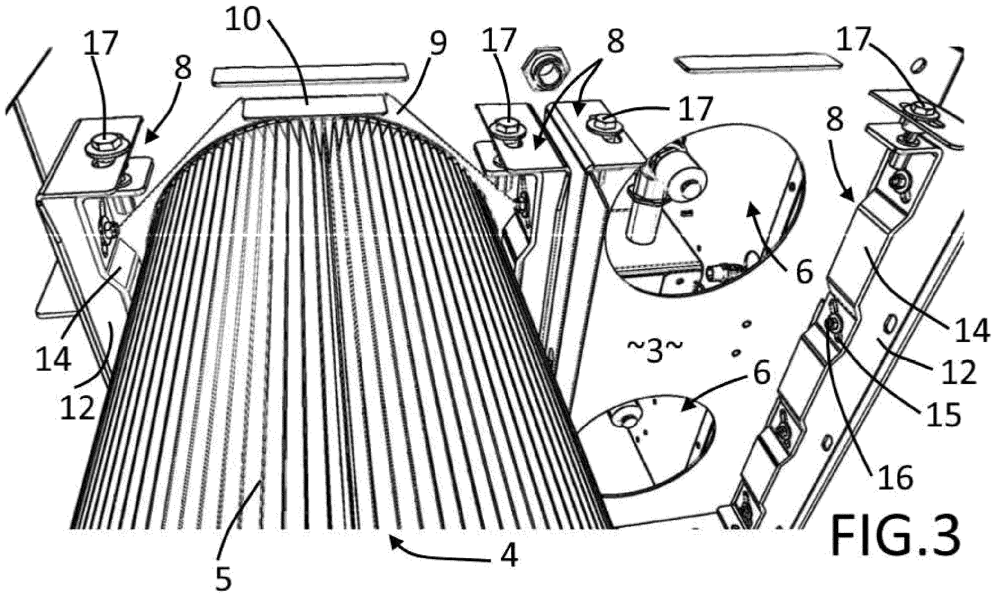

Fig. 3 zeigt den Filtereinsatz 4 in einer um 45° um seine Hochachse gedrehten Ausrichtung, die seiner Gebrauchs-Ausrichtung entspricht, und in welcher die Flanschplatte 9 mit ihrer längeren Ausrichtung die beiden Tragschienen 8 übergreift. Der Filtereinsatz 4 kann in dieser Ausrichtung auf die beiden Tragschienen 8 gehängt werden, indem er abgesenkt wird, bis die Flanschplatte 9 auf den beiden Tragschienen 8 der Halterung aufliegt. In dieser Ausrichtung weist einer der beiden Handgriffe 10 zur Zugangsöffnung, so dass der Filtereinsatz 4 an diesem Handgriff 10 erfasst und gehandhabt werden kann, beispielsweise auf den Tragschienen 8 weiter ins Innere des Gehäuses 2 geschoben werden kann, um auf diese Weise mehrere Filtereinsätze 4 hintereinander in einer Halterung anzuordnen, wie dies aus Fig. 15 ersichtlich ist. Bei der späteren Entnahme der Filtereinsätze 4 können diese an den jeweils zur Zugangsöffnung weisenden Handgriffen 10 erfasst und zur Zugangsöffnung gezogen werden und nach einer 45°-Drehung nach unten aus ihrer jeweiligen Halterung entnommen werden, indem sie zwischen den Tragschienen 8 abgesenkt werden. Außerhalb der Halterung kann der Filtereinsatz 4 mittels beider Handgriffe 10 sicher erfasst und getragen werden.

Fig. 3 zeigt weiterhin den mehrteiligen Aufbau der Tragschienen 8: jede Tragschiene 8 weist eine fest installierte Halteleiste 12 auf sowie eine bewegliche Hubleiste 14 mit darin angeordneten, schräg verlaufenden Langlöchern 15. Durch die Langlöcher 15 der Hubleisten 14 erstrecken sich Bolzen 16, die an der jeweiligen Halteleiste 12 derselben Tragschiene 8 fixiert sind. Die Hubleisten 14 verlaufen mehrfach abgewinkelt, so dass sie einerseits mehrfach einen Abstand zu den Halteleisten 12 aufweisen und andererseits mehrfach den Halteleisten 12 dort anliegen, wo sich eine Schrägführung der jeweiligen Halteleiste 8 in Form eines Langlochs 15 und eines Bolzens 16 befindet.

Sowohl die Halteleisten 12 als auch die Hubleisten 14 weisen jeweils abgekantete, zur Zugangsöffnung weisende Stirnabschnitte auf, wobei sich Schrauben 17 an den Stirnabschnitten der Halteleisten 12 abstützen und gewindemäßig mit den Stirnabschnitten der Hubleisten 14 zusammenwirken. Durch Betätigung der jeweiligen Schraube 17 wird dementsprechend der Abstand der zugeordneten Stirnflächen zwischen der jeweiligen Halteleiste 12 und der Hubleiste 14 verändert, und aufgrund der Schrägführung mittels der Langlöcher 15 erfolgt dabei automatisch auch eine Höhenverstellung der Hubleiste 14. Da die Flanschplatten 9 der Filtereinsätzen 4 jeweils auf einer Hubleiste 14 einer Tragschiene 8 aufliegen, können durch die entsprechende Höhenbewegung der Hubleiste 14 die Filtereinsätzen 4 angehoben werden, bis deren Dichtungsringe 11 von unten fluiddicht dem Trennblech 3 anliegen, so dass in diesem Zustand der Fluidfilter 1 betriebsbereit ist. Nach Absenken der Hubleisten 14 hingegen können die Filtereinsätze 4 auf den Tragschienen 8 montiert bzw. von den Tragschienen 8 demontiert werden.

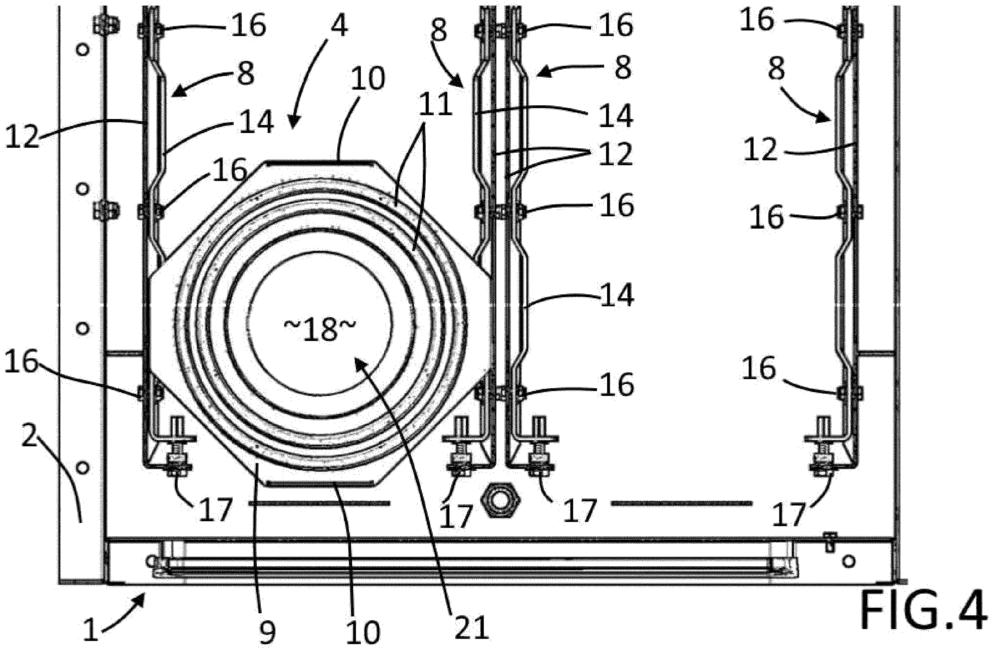

Fig. 4 zeigt den Filtereinsatz 4 wie Fig. 3, jedoch in einer Draufsicht von oben, in der Gebrauchs-Ausrichtung, in welcher die Flanschplatte 9 mit ihrer längeren Ausrichtung die beiden Tragschienen 8 übergreift. Aus dieser Ansicht ist ein geschlossener Boden 18 des Filtereinsatzes 4 ersichtlich. Es ist erkennbar, dass die Flanschplatte 9 ihre längste Ausdehnung zwischen zwei parallelen Seiten in der Richtung quer zu den Tragschienen 8 aufweist, während die dazu um 45° versetzten Seiten der Flanschplatte 9 jeweils die geringste Länge der Flanschplatte 9 zwischen zwei parallelen Seiten aufweist.

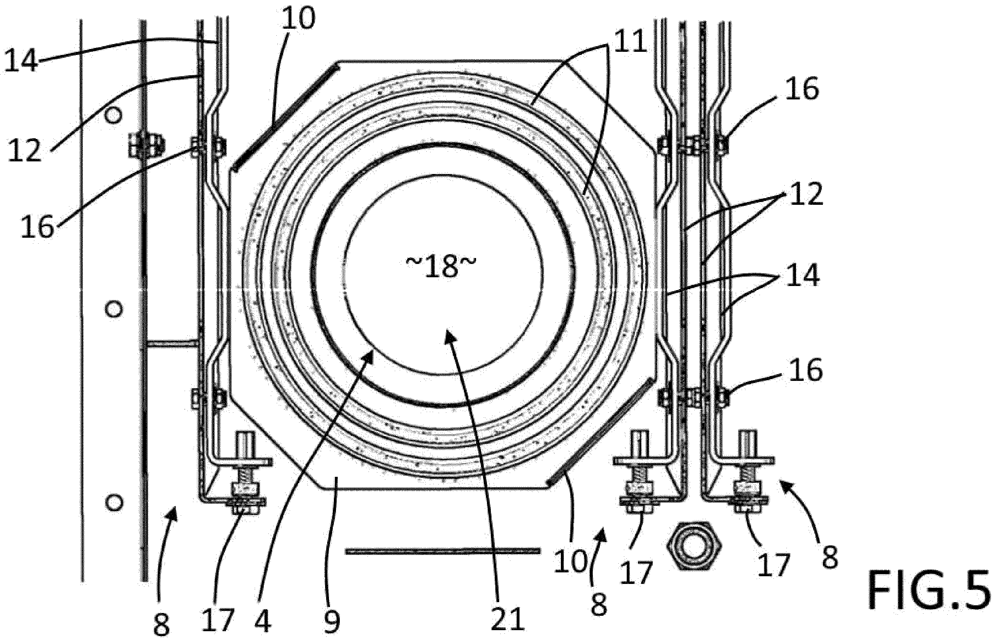

Fig. 5 zeigt eine Draufsicht wie Fig. 3, wobei der Filtereinsatz 4 jedoch in seiner Montagestellung dargestellt ist, die er während der Montage bzw. Demontage im Fluidfilter 1 einnimmt, entsprechend den Fig. 1 und 2. In dieser Ausrichtung passt die Flanschplatte 9 mit ihrer kürzesten Länge zwischen die beiden Hubleisten 14 der beiden Tragschienen 8, so dass der Filtereinsatz 4 in dieser Ausrichtung zwischen den beiden Tragschienen 8 auf- und abwärts bewegt werden kann. Rechts neben den beiden Tragschienen 8, die dem Filtereinsatz 4 zugeordnet sind, ist eine dritte Tragschienen 8 erkennbar, die einen Bestandteil einer zweiten Halterung bildet, welche dazu dient, Filtereinsätze rechts neben dem dargestellten Filtereinsatz 4 aufzunehmen.

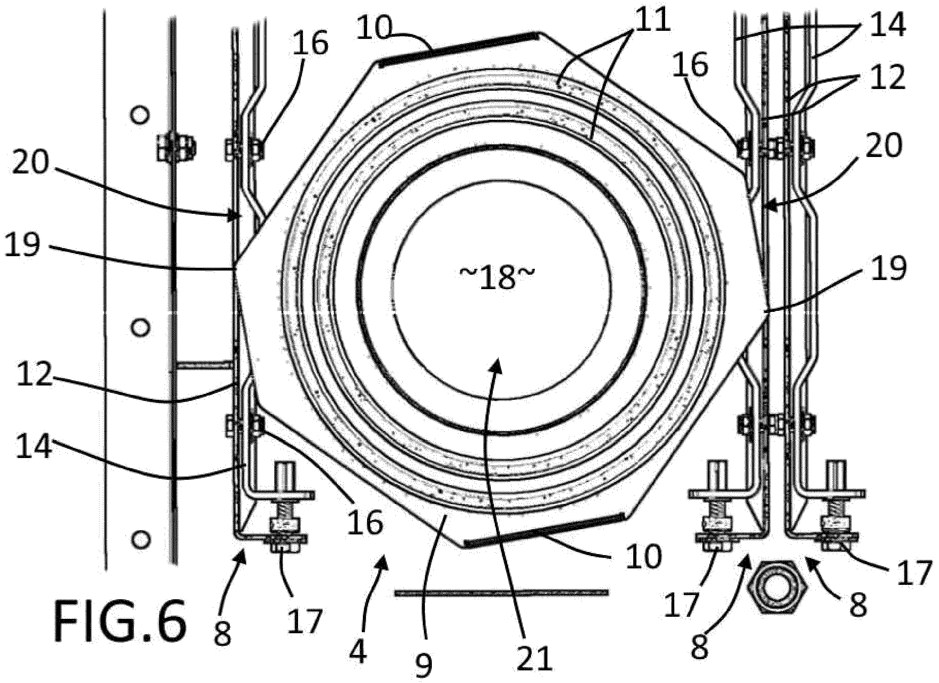

Fig. 6 zeigt eine Zwischenstellung, die der Filtereinsatz 8 während seiner Montage bzw. Demontage einnimmt: Ecken 19 der Flanschplatte 9 ragen, wenn der Filtereinsatz 4 um seine Hochachse gedreht wird, in den Bereich hinein, in welchem die Halteleisten 12 verlaufen. Dementsprechend muss während der Montage der Filtereinsatz 4 entweder über die Halteleisten 12 angehoben werden, was dann möglich ist, wenn die Halteleisten 12 in einem ausreichend großen Abstand unterhalb des Trennblech 3 angeordnet sind. Bei dem dargestellten Ausführungsbeispiel ist allerdings vorgesehen, dass die Halteleisten 12 bis an das Trennblech 3 heranreichen, so dass eine vorteilhafte Kraftübertragung sichergestellt ist, wenn mittels der Hubleisten 14 die Dichtungsringe 11 an das Trennblech 3 angepresst werden, so dass ein fluiddichter Anschluss des Filtereinsatzes 4 an das Trennblech 3 gewährleistet ist. Die Halteleisten 12 weisen daher Aussparungen 20 auf, die durch einen burgzinnenartigen Verlauf ihrer Oberkante oder in Form von Schlitzen ausgestaltet sind. In diese Aussparungen 20 ragen die Ecken 19 während der Drehbewegung des Filtereinsatzes 4 hinein, so dass die Drehbewegung ungehindert erfolgen kann.

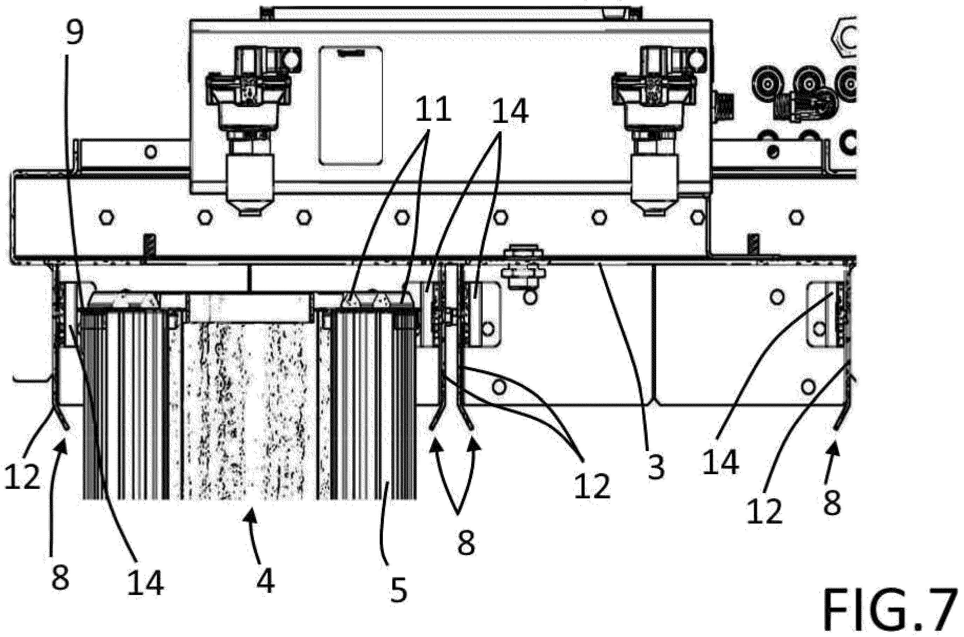

Fig. 7 zeigt einen Vertikalschnitt durch den Filtereinsatz 4, wobei dieser sich in seiner Montagestellung befindet, die er während der Montage bzw. Demontage im Fluidfilter 1 einnimmt, entsprechend den Fig. 1, 2 und 5. Die Flanschplatte 9 ist dabei noch nicht über die Hubleisten 14 der Tragschienen 8 angehoben, sondern befindet sich auf der Höhe zwischen den beiden benachbarten Hubleiste 14.

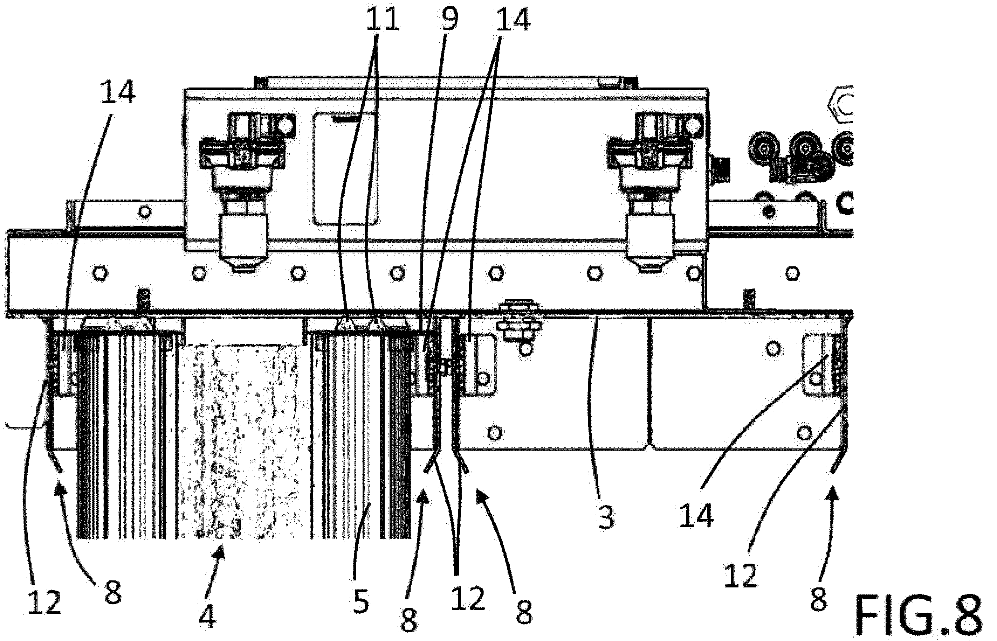

Fig. 8 zeigt in einer Ansicht ähnlich Fig. 7 den weiteren Montagefortschritt, nachdem der Filtereinsatz 4 über die Hubleiste und 4 hinaus angehoben und um 45° um seine Hochachse gedreht worden ist, so dass nun die Flanschplatte 9 auf den beiden Hubleisten 14 liegt und sich der Filtereinsatz 4 in seiner Gebrauchs-Ausrichtung auf den Tragschienen 8 befindet. Die Hubleisten 14 sind noch nicht angehoben worden und befinden sich in derselben Stellung relativ zu den Halteleisten 12 wie in Fig. 7.

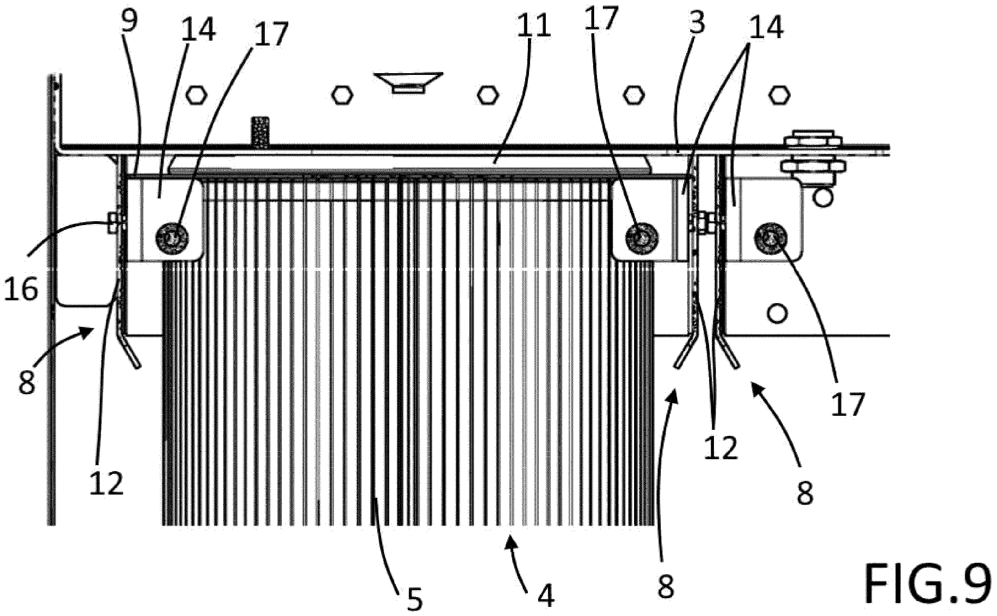

Fig. 9 zeigt die Situation von Fig. 8 in einer Seitenansicht auf den Filtereinsatz 4 und in Längsrichtung der Tragschienen 8, also beispielsweise einen Blick durch die Zugangsöffnung der Frontseite 7 in den Fluidfilter 1.

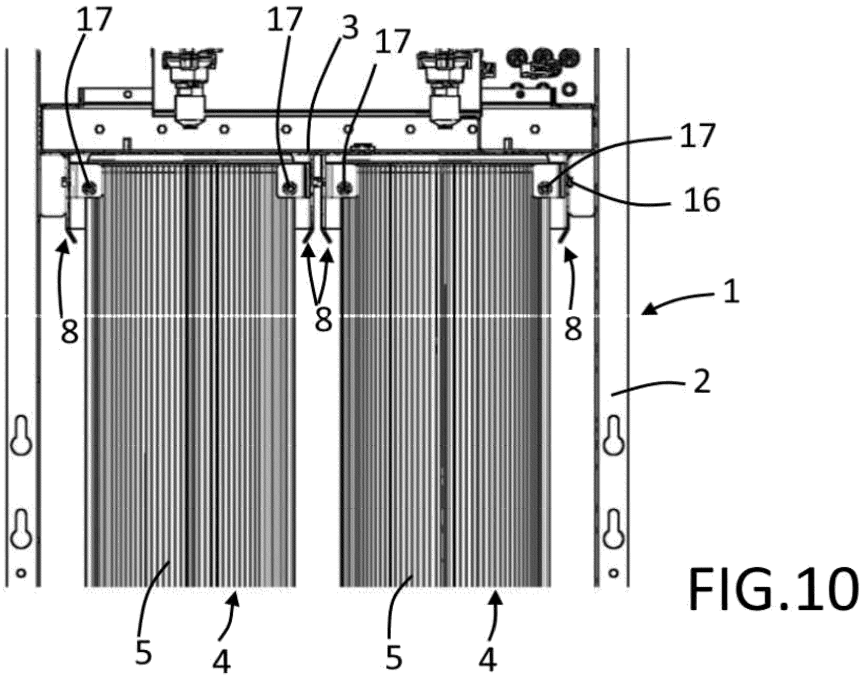

Fig. 10 zeigt einen Blick in den Fluidfilter 1 bei abgenommener Frontseite 7, wobei die beiden Halterungen mit Filtereinsätzen 4 bestückt sind, so dass sämtliche vier Tragschienen 8 genutzt werden und jeweils zwei Filtereinsätzen 4 nebeneinander angeordnet sind. Es ist erkennbar, dass die Betätigungseinrichtung zur Höhenverstellung der Hubleisten 14, nämlich die jeweiligen Stirnflächen der Tragschienen 8 mit den Schrauben 17, einer rein horizontalen Montage der Filtereinsätzen 4 im Wege stehen. Durch die Art der Montage, bei welcher die Filtereinsätzen 4 von unten zwischen die Tragschienen 8 geführt werden, können Filterkörper 5 mit einem vorteilhaft großen Querschnitt verwendet werden, wie er bei einer rein horizontalen Montage der Filtereinsätzen 4 nicht möglich wäre.

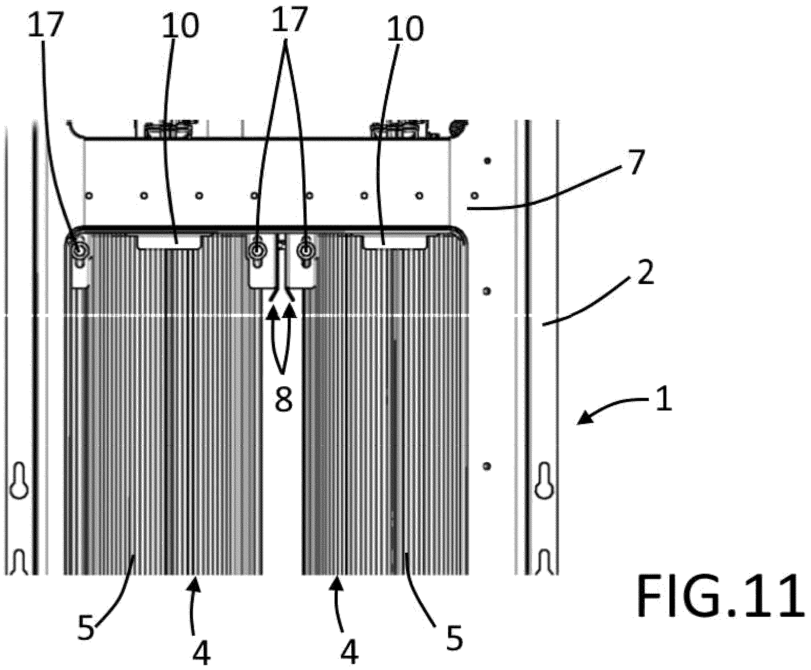

Fig. 11 zeigt eine Ansicht ähnlich Fig. 10, wobei jedoch die Frontseite 7 des Gehäuses 2 dargestellt ist und der Vollständigkeit halber auch die Handgriffe 10 der Filtereinsätze 4 dargestellt sind, die in Fig. 10 aus Übersichtlichkeitsgründen nicht dargestellt sind. Die Schrauben 17 von drei Tragschienen 8 sind in dem Türausschnitt erkennbar, während die vierte, rechte Tragschiene 8 von der Frontseite 7 verdeckt ist, zumal sich der Türausschnitt nicht symmetrisch mittig in der Frontseite 7 befindet. Diese vierte Tragschienen 8 befindet sich somit in einem sogenannten Totraum innerhalb des Gehäuses 2, nämlich in einem Bereich des Innenraums, der von der Frontseite 7 verdeckt ist und somit nicht in einer geradlinigen Bewegung zugänglich ist, welche in einer Bewegungsrichtung durch den Türausschnitt hindurch und quer zur Frontseite 7 verläuft. Die Schraube 17 zur Höhenbewegung der Hubleiste 14 dieser rechten Tragschiene 8 kann dennoch problemlos mittels eines Maul- oder Ratschenschlüssels oder eines winkligen Werkzeugs wie zum Beispiel einer sogenannten Knarre betätigt werden.

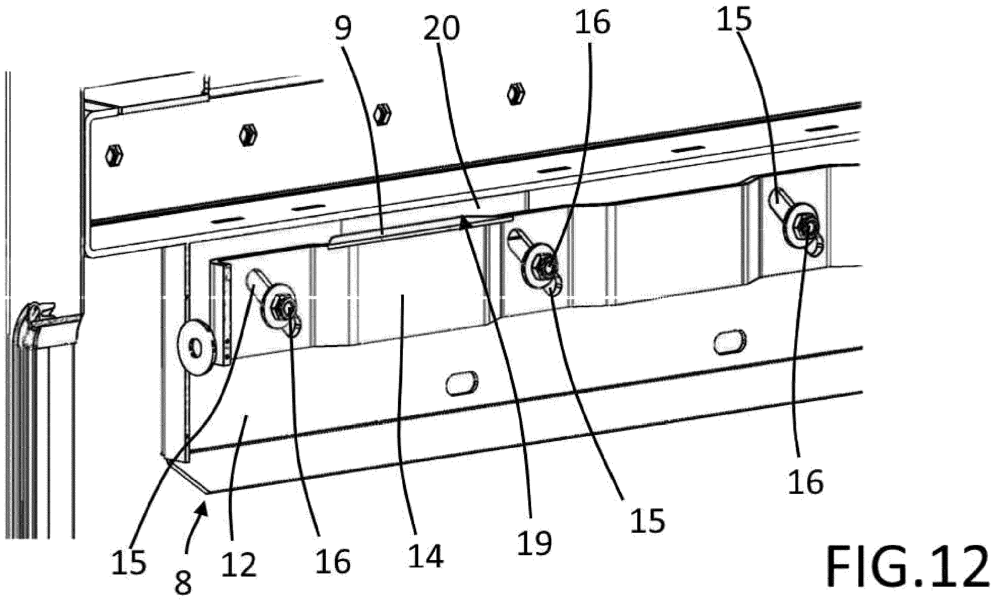

Fig. 12 zeigt eine perspektivische Ansicht auf eine Tragschiene 8. Oberhalb der Hubleiste 14 ist lediglich ein streifenförmiger Abschnitt einer Flanschplatte 9 dargestellt, der aufgrund der achteckigen Geometrie der Flanschplatte 9 eine Trapezform aufweist. Weiterhin ist aus dieser Blickrichtung eine Aussparung 20 in der Halteleiste 12 erkennbar, in welche bei einer Drehbewegung des Filtereinsatzes 4 die Flanschplatte 9 mit einer Ecke 19 eindringen kann. Weitere Aussparungen 20 sind bei diesem Ausführungsbeispiel des Fluidfilters 1 nicht vorgesehen, denn ergonomisch vorteilhaft erfolgt die Montage oder Demontage eines Filtereinsatzes 4 nicht im hinteren Bereich des Innenraums, sondern vielmehr nahe der Zugangsöffnung, so dass nur hier die Drehbewegung der Filtereinsätze 4 erfolgt und nur hier die Aussparung 20 erforderlich ist.

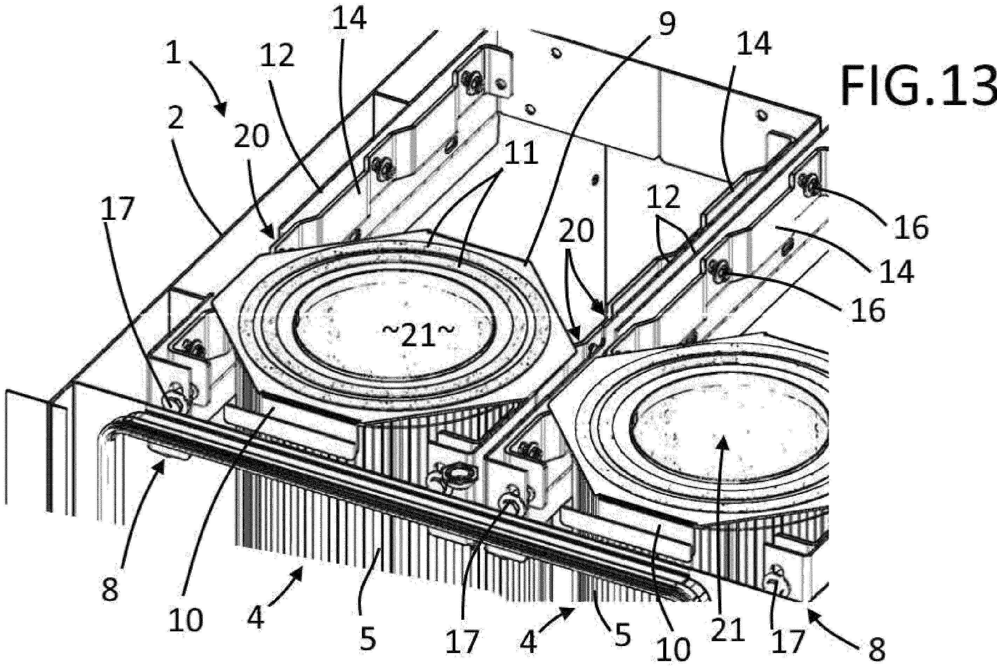

Fig. 13 zeigt in einer perspektivischen Ansicht von oben zwei Filtereinsätze 4 in ihren jeweiligen Halterungen, wobei die Flanschplatte 9 jedes Filtereinsatzes 4 auf ihren beiden zugeordneten Tragschienen 8 und insbesondere auf deren Hubleisten 14 aufliegt. Auch aus dieser Blickrichtung sind die Aussparungen 20 in den Halteleisten 12 der Tragschienen 8 erkennbar.

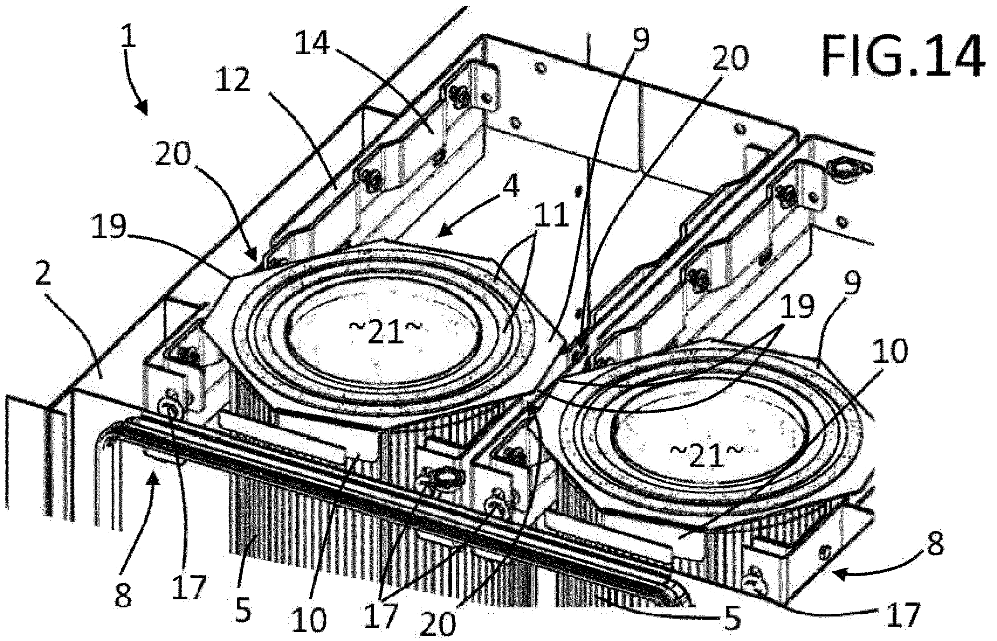

Fig. 14 zeigt in einer perspektivischen Ansicht wie Fig. 13 die beiden Filtereinsätze 4 während ihrer Drehbewegung, während welcher die Ecken 19 der Flanschplatten 9 in die Aussparungen 20 der Halteleisten 12 ragen. Diese Darstellung ist symbolisch, da aufgrund der räumlichen Verhältnisse lediglich stets ein einziger Filtereinsatz 4 gehandhabt wird von einer Person, die sich vor dem Türausschnitt des Gehäuses 2 befindet.

### Bezugszeichenliste:

- 1: Fluidfilter
- 2: Gehäuse
- 3: Trennblech
- 4: Filtereinsatz
- 5: Filterkörper
- 6: Durchtrittsöffnung
- 7: Frontseite
- 8: Tragschienen
- 9: Flanschplatte
- 10: Handgriff
- 11: Dichtungsring
- 12: Halteleiste
- 14: Hubleiste
- 15: Langloch
- 16: Bolzen
- 17: Schraube
- 18: Boden
- 19: Ecke
- 20: Aussparung
- 21: Auslassöffnung

## Patentansprüche

1. Verwendung eines Filtereinsatzes (4),
• mit einem Filterkörper (5),
∘ der länglich
∘ und für das zu filternde Fluid durchlässig ausgestaltet ist,
∘ im Gebrauch aufrecht ausgerichtet ist,
∘ und eine obere Auslassöffnung (21) aufweist,
• und mit einer Flanschplatte (9),
∘ die um die Auslassöffnung (21) des im Gebrauch nach unten hängenden Filterkörpers (5) verläuft und den Filterkörper (5) trägt
∘ und einen umlaufenden Kragen schafft, der sich in radialer Richtung über den Filterkörper (5) hinaus nach außen erstreckt,
∘ wobei die Flanschplatte (9) in Draufsicht zwei unterschiedliche Längen in zwei unterschiedlichen Richtungen und somit eine Längs- und eine Querrichtung aufweist,
für einen Fluidfilter (1),
• der ein Gehäuse (2) aufweist,
∘ das einen Innenraum umgibt
∘ und mittels einer verschließbaren Zugangsöffnung den Zugang zum Innenraum des Gehäuses (2) wahlweise freigibt oder verschließt,
wobei der Innenraum breiter ist als die Zugangsöffnung und der Anteil des Innenraums, der seitlich neben der Zugangsöffnung verläuft, also ein Bereich des Innenraums, der von der Frontseite (7) verdeckt ist und somit nicht in einer geradlinigen Bewegung zugänglich ist, welche in einer Bewegungsrichtung durch den Türausschnitt hindurch und quer zur Frontseite (7) verläuft, als Totraum bezeichnet ist,
• und der im Gehäuse (2) eine Halterung aufweist, die zur Festlegung der Flanschplatte (9) eines Filtereinsatzes (4) bestimmt ist,
**wobei**
die Halterung und der Filtereinsatz (4) sich jeweils bis in den Totraum erstrecken,
und der Filtereinsatz (4) in der Art gehalten ist, dass die Flanschplatte (9) sich in ihrer Längsrichtung bis in den Totraum erstreckt.

2. Verwendung eines Filtereinsatzes (4) nach Anspruch 1, dessen Flanschplatte (9) in Draufsicht von einem Viereck abweichend ausgestaltet ist.

3. Verfahren zur Montage eines Filtereinsatzes (4) in einem Gehäuse (2) eines Fluidfilters (1),
• wobei das Gehäuse (2) einen Innenraum umgibt,
∘ und eine verschließbare Zugangsöffnung aufweist, welche den Zugang zum Innenraum des Gehäuses (2) wahlweise freigibt oder verschließt,
∘ wobei der Innenraum breiter ist als die Zugangsöffnung und der Anteil des Innenraums, der seitlich neben der Zugangsöffnung verläuft, also ein Bereich des Innenraums, der von der Frontseite (7) verdeckt ist und somit nicht in einer geradlinigen Bewegung zugänglich ist, welche in einer Bewegungsrichtung durch den Türausschnitt hindurch und quer zur Frontseite (7) verläuft, als Totraum bezeichnet ist,
• und wobei der Filtereinsatz (4)
∘ einen Filterkörper (5) aufweist,
- der länglich
- und für das zu filternde Fluid durchlässig und filterwirksam ausgestaltet ist,
- im Gebrauch aufrecht ausgerichtet ist,
- ein geschlossenes unteres Ende
- und eine obere Auslassöffnung (21) aufweist,
∘ sowie eine Flanschplatte (9) aufweist,
- die um die Auslassöffnung (21) des im Gebrauch nach unten hängenden Filterkörpers (5) verläuft und den Filterkörper (5) trägt
- und einen umlaufenden Kragen schafft, der sich in radialer Richtung über den Filterkörper (5) hinaus nach außen erstreckt,
- wobei die Flanschplatte (9) in Draufsicht zwei unterschiedliche Längen in zwei unterschiedlichen Richtungen und somit eine Längs- und eine Querrichtung aufweist,
• und wobei der Fluidfilter (1) eine Halterung aufweist, die zur Festlegung der Flanschplatte (9) eines Filtereinsatzes (4) bestimmt ist,
• mit folgenden Verfahrensschritten
∘ die Zugangsöffnung des Gehäuses (2) wird geöffnet,
∘ der Filtereinsatz (2) wird in die Halterung eingebracht,
∘ und die Zugangsöffnung des Gehäuses (2) wird geschlossen,
**gekennzeichnet durch**
die folgenden Verfahrensschritte
• bevor der Filtereinsatz (4) in die Halterung eingebracht wird, wird er außerhalb des Gehäuses (2) in eine erste Ausrichtung gebracht, in welcher die Längsachse der Flanschplatte (9) in den Innenraum weist,
• in dieser ersten Ausrichtung wird der Filtereinsatz (4) in den Innenraum eingebracht,
• im Innenraum wird der Filtereinsatz (2) um seine Hochachse geschwenkt und in eine zweite Ausrichtung gebracht, in welcher die Längsachse der Flanschplatte (9) sich in den Totraum erstreckt.

4. Verfahren nach Anspruch 3,
**dadurch gekennzeichnet,**
**dass** der Filtereinsatz (4) in der ersten Ausrichtung in die Halterung eingebracht wird
und in dem Zustand, in welchem der Filtereinsatz (4) von der Halterung getragen wird, in die zweite Ausrichtung gebracht wird.

5. Verfahren nach Anspruch 3 oder 4,
**dadurch gekennzeichnet,**
**dass** die Halterung bewegliche Haltemittel aufweist, die wahlweise zwischen einer die Flanschplatte (9) freigebenden Offenstellung und einer die Flanschplatte (9) festlegenden Haltestellung beweglich sind, und dass die Haltemittel in ihre Offenstellung gebracht werden, bevor der Filtereinsatz (4) in die Halterung eingebracht wird,
und **dass** die Haltemittel in ihre Haltestellung gebracht werden, nachdem der Filtereinsatz (4) in die zweite Ausrichtung gebracht worden ist.

6. Filtereinsatz (4) für einen Fluidfilter (1),
• mit einem Filterkörper (5),
∘ der länglich
∘ und für das zu filternde Fluid durchlässig und filterwirksam ausgestaltet ist,
∘ im Gebrauch aufrecht ausgerichtet ist,
∘ ein geschlossenes unteres Ende
∘ und eine obere Auslassöffnung (21) aufweist,
• und mit einer Flanschplatte (9),
∘ die um die obere Auslassöffnung (21) des im Gebrauch nach unten hängenden Filterkörpers (5) verläuft und den Filterkörper (5) trägt
∘ und einen umlaufenden Kragen schafft, der sich in radialer Richtung über den Filterkörper (5) hinaus nach außen erstreckt,
∘ wobei die Flanschplatte (9) in Draufsicht zwei unterschiedliche Längen in zwei unterschiedlichen Richtungen und somit eine Längs- und eine Querrichtung aufweist,
**dadurch gekennzeichnet,**
**dass** die Flanschplatte (9) in Draufsicht von einem Viereck abweichend ausgestaltet ist,
wobei die Flanschplatte (9) unregelmäßig achteckig ausgestaltet ist, wobei zwei gegenüberliegende Seiten einen größeren Abstand zueinander aufweisen als zwei andere, ebenfalls gegenüberliegende Seiten.

7. Filtereinsatz nach Anspruch 6,
**dadurch gekennzeichnet,**
**dass** der Filterkörper (5) einen kreisrunden Querschnitt aufweist, wobei der Filterkörper (5) vorzugsweise zylindrisch oder konisch ausgestaltet ist.

8. Filtereinsatz nach Anspruch 7,
**dadurch gekennzeichnet,**
**dass** sich der Filterkörper (5) zu seinem von der Flanschplatte (9) fernen Ende erweitert.

9. Filtereinsatz nach einem der Ansprüche 6 bis 8,
**dadurch gekennzeichnet,**
**dass** der Filterkörper (5) an seinem unteren Ende eine formstabile Endscheibe aufweist.

10. Fluidfilter (1),
• der ein Gehäuse (2) aufweist,
∘ das einen Innenraum umgibt
∘ und eine verschließbare Zugangsöffnung aufweist, welche den Zugang zum Innenraum des Gehäuses wahlweise freigibt oder verschließt,
∘ wobei der Innenraum breiter ist als die Zugangsöffnung und der Anteil des Innenraums, der seitlich neben der Zugangsöffnung verläuft, also ein Bereich des Innenraums, der von der Frontseite (7) verdeckt ist und somit nicht in einer geradlinigen Bewegung zugänglich ist, welche in einer Bewegungsrichtung durch den Türausschnitt hindurch und quer zur Frontseite (7) verläuft, als Totraum bezeichnet ist,
• und der einen Filtereinsatz (4) aufweist,
∘ mit einem Filterkörper (5),
- der länglich
- und für das zu filternde Fluid durchlässig und filterwirksam ausgestaltet ist,
- im Gebrauch aufrecht ausgerichtet ist,
- ein geschlossenes unteres Ende
- und eine obere Auslassöffnung (21) aufweist,
∘ und mit einer Flanschplatte (9),
- die um die Auslassöffnung (21) des im Gebrauch nach unten hängenden Filterkörpers (5) verläuft und den Filterkörper (5) trägt
- und einen umlaufenden Kragen schafft, der sich in radialer Richtung über den Filterkörper (5) hinaus nach außen erstreckt,
- wobei die Flanschplatte (9) in Draufsicht zwei unterschiedliche Längen in zwei unterschiedlichen Richtungen und somit eine Längs- und eine Querrichtung aufweist,
• und der im Gehäuse (2) eine Halterung aufweist, welche die Flanschplatte (9) des Filtereinsatzes (4) festlegt,
**dadurch gekennzeichnet,**
**dass** die Halterung sich bis in den Totraum erstreckt, derart, dass der in der Halterung festgelegte Filtereinsatz (4) teilweise innerhalb des Totraums angeordnet ist.

11. Fluidfilter nach Anspruch 10,
**dadurch gekennzeichnet,**
**dass** die Halterung die Aufnahme von wenigstens zwei Filtereinsätzen (4) hintereinander ermöglichend ausgestaltet ist.

12. Fluidfilter nach Anspruch 10 oder 11,
**dadurch gekennzeichnet,**
**dass** das Gehäuse (2) oberhalb des Filtereinsatzes (4) einen Reinraum für gefiltertes Fluid aufweist,
wobei der Reinraum gegen den Filtereinsatz (4) durch eine Trennplatte (3) abgetrennt ist,
und wobei die Trennplatte (3) oberhalb der Halterung in der Art angeordnet ist, dass der in der Halterung befindliche Filtereinsatz (4) von unten an die Trennplatte (3) anschließt.

13. Halterung, die dazu bestimmt ist, im Gebrauch eine längliche Flanschplatte (9) eines Filtereinsatzes (4) in einem Fluidfilter (1) festzulegen,
• wobei die Halterung zwei Tragschienen (4) aufweist, die in einem solchen Abstand zueinander verlaufen,
∘ dass sie im Gebrauch zwischen sich einen von der Flanschplatte (9) herabhängenden Filterkörper (5) sowie eine Auslassöffnung (21) aufnehmen, die sich in der Flanschplatte (9) des Filtereinsatzes (4) befindet,
∘ und dass die Flanschplatte (9) im Gebrauch auf den beiden Tragschienen (8) aufliegt,
• und wobei die Tragschienen (8) höhenbeweglich sind zwischen einer abgesenkten und einer angehobenen Stellung,
**dadurch gekennzeichnet,**
**dass** die beiden Tragschienen (8) gegenüberliegende Aussparungen (20) aufweisen,
deren Länge so bemessen ist, dass eine längliche Flanschplatte (9) in einer ersten Ausrichtung, in welcher sie sich längs zwischen den beiden Tragschienen (8) befindet, über die Tragschienen (8) hinaus nach oben anhebbar ist
und oberhalb der Tragschienen (8) in eine zweite Ausrichtung drehbar ist, in welcher sie quer zu den beiden Tragschienen (8) verläuft und die beiden Tragschienen (8) übergreift,
wobei die Aussparungen (20) derart ausgestaltet sind, dass die Flanschplatte (9) in einer Zwischenstellung zwischen der ersten und der zweiten Ausrichtung in die Aussparungen (20) eintaucht.

14. Halterung nach Anspruch 13,
**dadurch gekennzeichnet,**
**dass** die Halterung als Doppelhalterung ausgestaltet ist und eine mittlere Halteleiste (12) aufweist
sowie beiderseits der mittleren Halteleiste (12) jeweils eine Hubleiste (14),
wobei diese beiden Hubleisten (14)als innere Hubleisten (14) jeweils mit einer davon im Abstand angeordneten äußeren Tragschiene (8) zusammenwirken, derart, dass im Gebrauch zwei Filtereinsätze (4) nebeneinander in der Doppelhalterung angeordnet sind,
und wobei an der Halteleiste (12) beiderseitig Führungselemente angeordnet sind, die mit jeweils komplementären Führungselementen der beiden Hubleisten (14) zusammenwirken.

## Claims

1. Use of a filter insert (4),
• comprising a filter body (5),
∘ which is designed to be elongated
∘ and permeable to the fluid to be filtered,
∘ is oriented upright during use,
∘ and has an upper outlet opening (21),
• and comprising a flange plate (9),
∘ which runs around the outlet opening (21) of the filter body (5) hanging downwardly during use and supports the filter body (5),
∘ and provides a peripheral collar which extends outwardly in the radial direction beyond the filter body (5),
∘ wherein the flange plate (9) in plan view has two different lengths in two different directions and thus a longitudinal direction and a transverse direction,
for a fluid filter (1),
• which has a housing (2),
∘ which surrounds an interior, ∘ and selectively opens or closes the access to the interior of the housing (2) by means of a closable access opening,
wherein the interior is wider than the access opening and the portion of the interior which runs laterally adjacent to the access opening, i.e. a region of the interior which is concealed by the front face (7) and thus is not accessible in a linear movement, which runs in a direction of movement through the door cutout and transversely to the front face (7), is denoted as dead space,
• and which has in the housing (2) a holder which is designed to secure the flange plate (9) of a filter insert (4),
**wherein**
the holder and the filter insert (4) extend in each case into the dead space,
and the filter insert (4) is held in such a manner that the flange plate (9) extends into the dead space in its longitudinal direction.

2. Use of a filter insert (4) according to Claim 1, the flange plate (9) thereof in plan view being designed to deviate from a quadrilateral.

3. Method for the assembly of a filter insert (4) in a housing (2) of a fluid filter (1),
• wherein the housing (2) surrounds an interior,
∘ and has a closable access opening which selectively opens and closes the access to the interior of the housing (2),
∘ wherein the interior is wider than the access opening and the portion of the interior which runs laterally adjacent to the access opening, i.e. a region of the interior which is concealed by the front face (7) and thus is not accessible in a linear movement, which runs in a direction of movement through the door cutout and transversely to the front face (7), is denoted as dead space,
• and wherein the filter insert (4),
∘ has a filter body (5),
- which is designed to be elongated
- and permeable to the fluid to be filtered and have a filtering action,
- is oriented upright during use,
- has a closed lower end
- and an upper outlet opening (21),
∘ as well as a flange plate (9)
- which runs around the outlet opening (21) of the filter body (5) hanging downwardly during use and supports the filter body (5),
- and provides a peripheral collar which extends outwardly in the radial direction beyond the filter body (5),
- wherein the flange plate (9) in plan view has two different lengths in two different directions and thus a longitudinal direction and a transverse direction,
• and wherein the fluid filter (1) has a holder which is designed to secure the flange plate (9) of a filter insert (4),
• having the following method steps
∘ the access opening of the housing (2) is opened,
∘ the filter insert (2) is introduced into the holder,
∘ and the access opening of the housing (2) is closed,
**characterized by**
the following method steps
• before the filter insert (4) is introduced into the holder, it is brought outside the housing (2) into a first orientation in which the longitudinal axis of the flange plate (9) faces into the interior,
• in this first orientation, the filter insert (4) is introduced into the interior,
• in the interior, the filter insert (2) is pivoted around its vertical axis and brought into a second orientation in which the longitudinal axis of the flange plate (9) extends into the dead space.

4. Method according to Claim 3,
**characterized in that**
the filter insert (4) is introduced into the holder in the first orientation,
and is brought into the second orientation in the state in which the filter insert (4) is supported by the holder.

5. Method according to Claim 3 or 4,
**characterized in that**
the holder has a movable holding device which is selectively movable between an open position releasing the flange plate (9) and a holding position securing the flange plate (9), and **in that** the holding device is brought into its open position before the filter insert (4) is introduced into the holder, and **in that** the holding device is brought into its holding position after the filter insert (4) has been brought into the second orientation.

6. Filter insert (4) for a fluid filter (1),
• comprising a filter body (5),
∘ which is designed to be elongated
∘ and permeable to the fluid to be filtered and have a filtering action,
∘ is oriented upright during use,
∘ has a closed lower end
∘ and an upper outlet opening (21),
• and comprising a flange plate (9)
∘ which runs around the upper outlet opening (21) of the filter body (5) hanging downwardly during use and supports the filter body (5),
∘ and provides a peripheral collar which extends outwardly in the radial direction beyond the filter body (5),
∘ wherein the flange plate (9) in plan view has two different lengths in two different directions and thus a longitudinal direction and a transverse direction,
**characterized in that**
the flange plate (9) in plan view is designed to deviate from a quadrilateral,
wherein the flange plate (9) is designed to be irregularly octagonal,
wherein two opposing sides are at a greater distance from one another than two other, also opposing, sides.

7. Filter insert according to Claim 6,
**characterized in that**
the filter body (5) has a circular cross section, wherein the filter body (5) is preferably designed to be cylindrical or conical.

8. Filter insert according to Claim 7,
**characterized in that**
the filter body (5) widens toward its end remote from the flange plate (9).

9. Filter insert according to one of Claims 6 to 8, **characterized in that**
the filter body (5) has a dimensionally stable end plate at its lower end.

10. Fluid filter (1),
• which has a housing (2),
∘ which surrounds an interior,
∘ and has a closable access opening which selectively opens or closes the access to the interior of the housing,
∘ wherein the interior is wider than the access opening and the portion of the interior which runs laterally adjacent to the access opening, i.e. a region of the interior which is concealed by the front face (7) and thus is not accessible in a linear movement, which runs in a direction of movement through the door cutout and transversely to the front face (7), is denoted as dead space,
• and which has a filter insert (4),
∘ comprising a filter body (5),
- which is designed to be elongated
- and permeable to the fluid to be filtered and have a filtering action,
- is oriented upright during use,
- has a closed lower end
- and an upper outlet opening (21),
∘ and comprising a flange plate (9),
- which runs around the outlet opening (21) of the filter body (5) hanging downwardly during use and supports the filter body (5),
- and provides a peripheral collar which extends outwardly in the radial direction beyond the filter body (5),
- wherein the flange plate (9) in plan view has two different lengths in two different directions and thus a longitudinal direction and a transverse direction,
• and which has in the housing (2) a holder which secures the flange plate (9) of the filter insert (4),
**characterized in that**
the holder extends into the dead space in such a manner that the filter insert (4) secured in the holder is partially arranged within the dead space.

11. Fluid filter according to Claim 10,
**characterized in that**
the holder is designed to enable the receiving of at least two filter inserts (4) one behind the other.

12. Fluid filter according to Claim 10 or 11, **characterized in that**
the housing (2) has above the filter insert (4) a clean space for filtered fluid,
wherein the clean space is separated from the filter insert (4) by a partition panel (3),
and wherein the partition panel (3) is arranged above the holder in such a manner that the filter insert (4) located in the holder adjoins the partition panel (3) from below.

13. Holder which is designed to secure during use an elongated flange plate (9) of a filter insert (4) in a fluid filter (1),
• wherein the holder has two support rails (4) which run at such a distance from one another
∘ that during use they receive between one another a filter body (5) hanging down from the flange plate (9) as well as an outlet opening (21) which is located in the flange plate (9) of the filter insert (4),
∘ and that the flange plate (9) during use is positioned on the two support rails (8),
• and wherein the support rails (8) are vertically movable between a lowered position and a lifted position,
**characterized in that**
the two support rails (8) have opposing recesses (20),
the length thereof being dimensioned such that an elongated flange plate (9), in a first orientation in which it is located longitudinally between the two support rails (8), can be lifted upwardly beyond the support rails (8),
and is rotatable above the support rails (8) into a second orientation in which it runs transversely to the two support rails (8) and overlaps the two support rails (8),
wherein the recesses (20) are designed such that the flange plate (9) enters the recesses (20) in an intermediate position between the first and the second orientation.

14. Holder according to Claim 13,
**characterized in that**
the holder is designed as a double holder and has a central holding bar (12),
and in each case a lifting bar (14) on both sides of the central holding bar (12),
wherein these two lifting bars (14) cooperate as inner lifting bars (14) in each case with an outer support rail (8) arranged at a distance therefrom, such that during use two filter inserts (4) are arranged adjacent to one another in the double holder,
and wherein guide elements which cooperate in each case with complementary guide elements of the two lifting bars (14) are arranged on both sides of the holding bar (12).

## Revendications

1. Utilisation d'un insert filtrant (4),
• ayant un corps filtrant (5),
∘ qui est allongé
∘ et qui est configuré pour être perméable au fluide à filtrer,
∘ et qui est orienté verticalement en usage,
∘ et présente une ouverture de sortie supérieur (21),
• et ayant une plaque de bride (9),
∘ qui s'étend autour de l'ouverture de sortie (21) du corps de filtre (5) suspendu vers le bas en usage et qui porte le corps filtrant (5)
∘ et crée un collet périphérique qui s'étend en direction radiale vers l'extérieur au-delà du corps filtrant (5),
∘ la plaque de bride (9) présentant, en vue de dessus, deux longueurs différentes dans deux directions différentes et présentant ainsi une direction longitudinale et une direction transversale,
pour un filtre à fluide (1),
• qui présente un boîtier (2),
∘ qui entoure un espace intérieur
∘ et, au moyen d'une ouverture d'accès obturable, libère ou ferme sélectivement l'accès à l'espace intérieur du boîtier (2),
l'espace intérieur étant plus large que l'ouverture d'accès et la partie de l'espace intérieur qui s'étend latéralement à côté de l'ouverture d'accès, c'est-à-dire une zone de l'espace intérieur qui est masquée par le côté avant (7) et qui n'est donc pas accessible par un mouvement rectiligne s'étendant dans une direction de mouvement à travers la découpe de porte et transversalement au côté avant (7), étant désignée comme espace mort,
• et qui présente dans le boîtier (2) un support destiné à la fixation de la plaque de bride (9) d'un insert filtrant (4),
où
le support et l'insert filtrant (4) s'étendant chacun jusque dans l'espace mort,
et l'insert filtrant (4) étant maintenu de telle sorte que la plaque de bride (9) s'étend dans sa direction longitudinale jusque dans l'espace mort.

2. Utilisation d'un insert filtrant (4) selon la revendication 1,
dont la plaque de bride (9) est configurée, en vue de dessus, de manière différente d'un quadrilatère.

3. Procédé de montage d'un insert filtrant (4) dans un boîtier (2) d'un filtre à fluide (1),
• le boîtier (2) entourant un espace intérieur,
∘ et présentant une ouverture d'accès obturable qui libère ou ferme sélectivement l'accès à l'espace intérieur du boîtier (2),
∘ l'espace intérieur étant plus large que l'ouverture d'accès et la partie de l'espace intérieur qui s'étend latéralement à côté de l'ouverture d'accès, c'est-à-dire une zone de l'espace intérieur qui est masquée par le côté avant (7) et qui n'est donc pas accessible par un mouvement rectiligne s'étendant dans une direction de mouvement à travers la découpe de porte et transversalement au côté avant (7), étant désignée comme espace mort,
• et l'insert filtrant (4)
∘ présentant un corps filtrant (5),
- qui est allongé
- et est configuré pour être perméable au fluide à filtrer et pour assurer une action de filtration,
- est orienté verticalement en usage,
- présente ne extrémité inférieure fermée
- et une ouverture de sortie supérieure (21),
∘ et présente une plaque de bride (9),
- qui s'étend autour de l'ouverture de sortie (21) du corps filtrant (5) suspendu vers le bas en usage et qui porte le corps filtrant (5),
- et crée un collet périphérique qui s'étend en direction radiale vers l'extérieur au-delà du corps filtrant (5),
- la plaque de bride (9) présentant, en vue de dessus, deux longueurs différentes dans deux directions différentes et présentant ainsi une direction longitudinale et une direction transversale,
• et le filtre à fluide (1) présentant un support destiné à la fixation de la plaque de bride (9) d'un insert filtrant (4),
• avec les étapes de procédé suivantes
∘ l'ouverture d'accès du boîtier (2) est ouverte,
∘ l'insert filtrant (2) est introduit dans le support,
∘ et l'ouverture d'accès du boîtier (2) est fermée,
**caractérisé par**
les étapes de procédé suivantes
• avant que l'insert filtrant (4) ne soit introduit dans le support, il est amené, à l'extérieur du boîtier (2), dans une première orientation dans laquelle l'axe longitudinal de la plaque de bride (9) est orienté vers l'espace intérieur,
• dans cette première orientation, l'insert filtrant (4) est introduit dans l'espace intérieur,
• dans l'espace intérieur, l'insert filtrant (2) est pivoté autour de son axe vertical et amené dans une deuxième orientation dans laquelle l'axe longitudinal de la plaque de bride (9) s'étend dans l'espace mort.

4. Procédé selon la revendication 3,
**caractérisé**
**en ce que** l'insert filtrant (4) est introduit dans le support dans la première orientation.
et, dans l'état dans lequel l'insert filtrant (4) est porté par le support, est amené dans la deuxième orientation.

5. Procédé selon la revendication 3 ou 4,
**caractérisé**
**en ce que** le support présente des moyens de retenue mobiles qui peuvent être déplacés sélectivement entre une position ouverte libérant la plaque de bride (9) et une position de retenue fixant la plaque de bride (9), et en ce que les moyens de retenue sont amenés dans leur position ouverte avant que l'insert filtrant (4) ne soit introduit dans le support,
et **en ce que** les moyens de retenue sont amenés dans leur position de retenue après que l'insert filtrant (4) a été amené dans la deuxième orientation.

6. Insert filtrant (4) pour un filtre à fluide (1),
• ayant un corps filtrant (5),
∘ qui est allongé
∘ et est configuré pour être perméable au fluide à filtrer et pour assurer une action de filtration,
∘ et qui est orienté verticalement en usage,
∘ présente une extrémité inférieure fermée
∘ et présente une ouverture de sortie supérieur (21),
• et ayant une plaque de bride (9),
∘ qui s'étend autour de l'ouverture de sortie supérieure (21) du corps filtrant (5) suspendu vers le bas en usage et qui porte le corps filtrant (5),
∘ et crée un collet périphérique qui s'étend en direction radiale vers l'extérieur au-delà du corps filtrant (5),
∘ la plaque de bride (9) présentant, en vue de dessus, deux longueurs différentes dans deux directions différentes et présentant ainsi une direction longitudinale et une direction transversale,
caractérisé
n ce que la plaque de bride (9) est configurée, en vue de dessus, de manière différente d'un quadrilatère,
la plaque de bride (9) étant configurée sous la forme d'un octogone irrégulier, deux côtés opposés présentant une distance mutuelle plus grande que deux autres côtés également opposés.

7. Insert filtrant selon la revendication 6, **caractérisé**
**en ce que** le corps filtrant (5) présente une section circulaire, le corps filtrant (5) étant de préférence configuré sous forme cylindrique ou conique.

8. Insert filtrant selon la revendication 7, **caractérisé**
**en ce que** le corps filtrant (5) s'élargit vers son extrémité éloignée de la plaque de bride (9).

9. Insert filtrant selon l'une quelconque des revendications 6 à 8,
**caractérisé**
**en ce que** le corps filtrant (5) présente à son extrémité inférieure un disque d'extrémité de forme stable.

10. Filtre à fluide (1),
• qui présente un boîtier (2),
∘ qui entoure un espace intérieur
∘ et présente une ouverture d'accès obturable qui libère ou ferme sélectivement l'accès à l'espace intérieur du boîtier,
∘ l'espace intérieur étant plus large que l'ouverture d'accès et la partie de l'espace intérieur qui s'étend latéralement à côté de l'ouverture d'accès, c'est-à-dire une zone de l'espace intérieur qui est masquée par le côté avant (7) et qui n'est donc pas accessible par un mouvement rectiligne s'étendant dans une direction de mouvement à travers la découpe de porte et transversalement au côté avant (7), étant désignée comme espace mort,
• et qui présente un insert filtrant (4),
∘ avec un corps filtrant (5),
- qui est allongé
- et est configuré pour être perméable au fluide à filtrer et pour assurer une action de filtration,
- est orienté verticalement en usage,
- présente ne extrémité inférieure fermée
- et une ouverture de sortie supérieure (21),
∘ et avec une plaque de bride (9),
- qui s'étend autour de l'ouverture de sortie (21) du corps filtrant (5) suspendu vers le bas en usage et qui porte le corps filtrant (5),
- et crée un collet périphérique qui s'étend en direction radiale vers l'extérieur au-delà du corps filtrant (5),
- la plaque de bride (9) présentant, en vue de dessus, deux longueurs différentes dans deux directions différentes et présentant ainsi une direction longitudinale et une direction transversale,
• et qui présente dans le boîtier (2) un support qui fixe la plaque de bride (9) de l'insert filtrant (4), **caractérisé**
**en ce que** le support s'étend jusque dans l'espace mort, de sorte que l'insert filtrant (4) fixé dans le support est disposé partiellement à l'intérieur de l'espace mort.

11. Filtre à fluide selon la revendication 10, **caractérisé**
**en ce que** le support est configuré de manière à permettre la réception d'au moins deux inserts filtrants (4) l'un derrière l'autre.

12. Filtre à fluide selon la revendication 10 ou 11, **caractérisé**
**en ce que** le boîtier (2) présente, au-dessus de l'insert filtrant (4), un espace propre pour le fluide filtré,
le volume propre étant séparé de l'insert filtrant (4) par une plaque de séparation (3),
et la plaque de séparation (3) étant disposée au-dessus du support de telle sorte que l'insert filtrant (4) se trouvant dans le support vient en appui par le bas contre la plaque de séparation (3).

13. Support destiné à fixer, en usage, une plaque de bride allongée (9) d'un insert filtrant (4) dans un filtre à fluide (1),
• le support présentant deux rails porteurs (4) qui s'étendent à une telle distance l'un de l'autre,
∘ qu'ils reçoivent, en usage, entre eux un corps de filtre (5) suspendu vers le bas à partir de la plaque de bride (9) ainsi qu'une ouverture de sortie (21) située dans la plaque de bride (9) de l'insert filtrant (4),
∘ et en ce que la plaque de bride (9) repose, en usage, sur les deux rails porteurs (8),
• et les rails porteurs (8) étant mobiles en hauteur entre une position abaissée et une position relevée,
**caractérisé**
**en ce que** les deux rails porteurs (8) présentent des évidements opposés (20),
dont la longueur est dimensionnée de telle sorte qu'une plaque de bride allongée (9), dans une première orientation dans laquelle elle se trouve longitudinalement entre les deux rails porteurs (8), peut être soulevée vers le haut au-delà des rails porteurs (8) et est, au-dessus des rails porteurs (8), pivotable dans une deuxième orientation dans laquelle elle s'étend transversalement aux deux rails porteurs (8) et chevauche les deux rails porteurs (8),
les évidements (20) étant configurés de telle sorte que la plaque de bride (9), dans une position intermédiaire entre la première et la deuxième orientation, s'enfonce dans les évidements (20).

14. Support selon la revendication 13,
**caractérisé**
**en ce que** le support est configuré sous la forme d'un support double et présente une barre de retenue centrale (12)
ainsi que, de part et d'autre de la barre de retenue centrale (12), respectivement une barre de levage (14), les deux barres de levage (14) étant configurées comme barres de levage intérieures (14) et coopérant chacune avec un rail porteur extérieur (8) disposé à distance de celles-ci, de telle sorte que, en usage, deux inserts filtrants (4) sont disposés côte à côte dans le support double,
et des éléments de guidage étant disposés de part et d'autre sur la barre de retenue (12), lesquels coopèrent avec des éléments de guidage complémentaires respectifs des deux barres de levage (14).
